# FASCICULE DE BREVET EUROPEEN

(11) **EP 2 199 149 B1**
(45) Date de publication et mention de la délivrance du brevet: **06.11.2013**
(21) Numéro de dépôt: 09179473.5
(22) Date de dépôt: 16.12.2009
(51) Int. Cl.: B60P 1/273, B60P 1/32, B60P 1/64, B60P 7/13

(54) **Equipement amovible de transport d'une charge**
Abnehmbarer Aufbau zum Transport von Lasten
Removable equipment for transporting a load

(30) Priorité: 18.12.2008 FR 0858743
(43) Date de publication de la demande: 23.06.2010
(73) Titulaire: CMB Industrie, 38590 Saint Etienne de St. Geoirs (FR)
(72) Inventeur: Galfione, Florent, 38980, VIRIVILLE (FR)
(74) Mandataire: Chevalier, Renaud Philippe

(56) Documents cités:
- EP-A1- 1 707 437
- DE-A1- 10 250 678
- US-A- 5 100 279
- US-A- 6 092 863
- US-B1- 6 186 563
- US-B1- 6 648 420

## Description

La présente invention se rapporte à un équipement amovible de transport d'une charge, notamment du type benne amovible.

Elle se rapporte plus particulièrement à un équipement conçu pour être monté de façon amovible sur un véhicule et être verrouillé sur ledit véhicule au moyen d'au moins un verrou d'immobilisation dudit équipement sur ledit véhicule, ledit équipement étant apte à se déplacer linéairement sur ledit véhicule entre une position dite de transport et au moins une autre position dite d'arrêt, et comprenant au moins un dispositif d'actionnement d'un organe fonctionnel monté sur l'équipement.

L'invention se rapporte également à un procédé de montage d'un dispositif d'actionnement d'un organe fonctionnel sur un équipement amovible de transport d'une charge, notamment du type benne amovible.

Il est connu de monter de façon amovible de tels équipements amovibles de transport sur des véhicules du type camion ou poids lourds, afin de transporter des charges. L'équipement est généralement monté sur le châssis porteur du véhicule situé derrière la cabine de pilotage du véhicule.

Parmi les équipements amovibles sont connus plus particulièrement les bennes amovibles, parfois appelées bennes amovibles pour bras hydraulique, désignant de façon général un contenant (citerne, plateau, conteneur, etc.) construit autour d'une structure, généralement appelée berce ou berceau, pouvant être posée sur le véhicule, basculée et déposée sur le sol par un bras hydraulique monté sur le châssis porteur du véhicule, une telle benne amovible permettant le transport d'une charge et son déchargement par basculement de la benne.

Il est également connu d'employer des bétonnières amovibles comprenant une bétonnière, autrement appelée malaxeur de béton, construit autour d'un berceau pouvant être également posé sur le véhicule et déposée sur le sol par un bras hydraulique ; la bétonnière étant réalisée sous la forme d'un réservoir incliné (généralement en forme de toupie) mobile en rotation autour de son axe pour permettre le brassage du béton et empêcher le béton de prendre pendant le transport.

De manière classique, l'équipement amovible comprend un axe de préhension situé sur la partie frontale de l'équipement, disposé sur l'axe longitudinal médian du guidage du berceau, et permettant la préhension de l'équipement amovible par le bras hydraulique.

Comparativement à un équipement fixe de transport, autrement dit un équipement fixé à demeure sur le véhicule, un équipement amovible de transport présente l'avantage de pouvoir être retiré du véhicule et posé sur une aire de stockage, par exemple à même le sol, notamment à des fins de remplissage.

De manière générale, un véhicule porteur d'un équipement amovible comporte un châssis porteur sur lequel est fixé un dispositif de bras hydraulique comprenant un faux-châssis supportant un bras hydraulique mobile. Ce faux-châssis est généralement fixé sur le châssis porteur au moyen de plaques vissées, boulonnées ou soudées sur les respectivement châssis porteur et faux-châssis, de sorte que le faux-châssis est solidaire du châssis porteur. Le bras hydraulique est classiquement pourvu de vérin hydraulique et d'un bras muni d'un crochet à son extrémité libre adaptée pour la préhension de l'axe de préhension de la benne amovible.

La structure de l'équipement amovible, ou berceau, est supportée par le faux-châssis et verrouillée en position au moyen de verrous d'immobilisation dudit équipement sur le dispositif de bras hydraulique ; lesdits verrous d'immobilisation étant parfois appelés pinces de verrouillage. Il est en effet nécessaire d'immobiliser ou verrouiller l'équipement amovible sur le bras hydraulique, lorsque ce dernier fait pivoter ou basculer l'équipement amovible, et donc sur le véhicule, au moyen de ces verrous, généralement du type hydraulique, montés mobile sur ledit bras hydraulique entre une position ouverte de déverrouillage et une position fermée de verrouillage de l'équipement.

De façon classique, l'équipement amovible est apte à se déplacer linéairement sur le faux-châssis, et, donc sur le véhicule, entre une position dite de transport et une position dite d'arrêt. Pour cela, le bras hydraulique déplace l'équipement amovible sur le faux-châssis, afin de le faire avancer ou reculer sur le faux-châssis, et donc sur le véhicule porteur. Ainsi, lors du déplacement du véhicule, l'équipement amovible est verrouillé dans la position de transport correspondant à une position avancée proche de la cabine de pilotage afin d'avoir un maximum de poids sur l'essieu avant du véhicule et d'avoir un porte-à-faux arrière minimum pour faciliter les manoeuvres du véhicule. Lors de l'arrêt du véhicule, il peut être intéressant de faire reculer l'équipement amovible relativement au faux-châssis et au châssis porteur, en l'éloignant de la cabine, afin qu'il atteigne la position d'arrêt décalée par rapport à la position de transport. Dans le cas de la benne amovible, il est en effet intéressant de reculer la benne afin que, lors du déchargement de la charge suite au basculement de la benne vers l'arrière du véhicule par le bras hydraulique, ladite charge ne risque pas d'endommager l'arrière du véhicule en chutant hors de la benne basculée, et en particulier d'endommager les organes situés à l'arrière du véhicule comme les feux arrières, l'attelage ou la barre anti-encastrement.

Concernant la benne amovible, cette dernière présente une porte arrière, autrement appelé hayon ou ridelle arrière, qui s'articule sur la benne par son côté supérieur et qui est verrouillé classiquement au moyen de crochets de verrouillage, ou crochets de retenue, par son côté inférieur ; une telle porte arrière pouvant aussi bien être à un ou deux battants. Ces crochets sont généralement articulés sur une poutre de la benne qui est disposée juste en-dessous de la porte arrière afin que les crochets puissent verrouiller ou déverrouiller le bas de la porte arrière. Ainsi, lors du transport de la charge la porte arrière est verrouillée, et lors du déchargement de la charge la porte arrière est déverrouillée pour permettre le pivotement de la porte au niveau de ses articulations supérieures conjointement au basculement de la benne et ainsi permettre le vidage de la charge par gravité.

Dans les bennes fixes, autrement dit les bennes montées à demeure sur le véhicule et montées à basculement sur le châssis porteur dudit véhicule, il est connu de nombreux dispositifs d'actionnement des crochets de verrouillage.

Il est ainsi connu, notamment des documents FR 2 467 105 A1 et FR 2 421 755 A1, de prévoir des dispositifs d'actionnement mécanique permettant des opérations automatiques de déverrouillage de la porte arrière de la benne fixe au moment du déchargement, et de verrouillage de cette porte au cours du retour de la benne fixe basculante vers sa position initiale, au terme du déchargement. Pour cela, il est prévu un mécanisme complexe composé de diverses pièces telles que des leviers, bras, coulisse, tringle ou moyens à excentrique, dont certaines sont fixées solidairement sur le châssis porteur du véhicule et d'autres sur la benne fixe basculante. De tels dispositifs ne concernent cependant que les bennes fixes basculantes montées à demeure sur le véhicule, et non les bennes amovibles susceptibles d'être posées sur le véhicule et déposées sur le sol hors du châssis du véhicule. Ces dispositifs d'actionnement ne sont ainsi pas applicables pour une benne amovible, du fait de la nécessaire liaison mécanique entre la benne et le châssis du véhicule et du risque de rupture de cette liaison entre la benne et le camion, et présentent en outre l'inconvénient que seul le basculement de la benne peut provoquer le déverrouillage de la porte arrière.

Le document US 6 186 563 B1 divulgue également une benne fixe, montée à demeure et à basculement sur le châssis porteur d'un véhicule, où la benne comporte un dispositif d'actionnement des crochets de verrouillage de la porte arrière de la benne. Ce dispositif d'actionnement comporte un actionneur hydraulique apte à déplacer des butées d'avant en arrière, un mécanisme de loquet relié aux crochets de verrouillage, et un assemblage de liaison, du type tringlerie, comportant plusieurs pièces articulées entre elles, dont une pièce conçue pour être poussée par l'une des butées quand l'actionneur hydraulique déplace la butée vers l'arrière. En utilisation, l'actionneur hydraulique déplace ainsi la butée vers l'arrière, qui vient alors pousser la pièce de l'assemblage de liaison, et cet assemblage de liaison transforme cette poussée en un déplacement du mécanisme de loquet qui ouvre alors les crochets de verrouillage.

Le dispositif d'actionnement décrit dans ce document US 6 186 563 B1 présente des inconvénients similaires à ceux des dispositifs décrits dans les documents FR 2 467 105 A1 et FR 2 421 755 A1. En effet, ce dispositif ne concerne que les bennes fixes basculantes montées à demeure sur le véhicule, et non les bennes amovibles susceptibles d'être posées sur le véhicule et déposées sur le sol hors du châssis du véhicule. De plus, ce dispositif d'actionnement n'est pas applicable pour une benne amovible, du fait de la nécessaire liaison hydraulique entre la benne et véhicule pour pouvoir alimenter l'actionneur hydraulique.

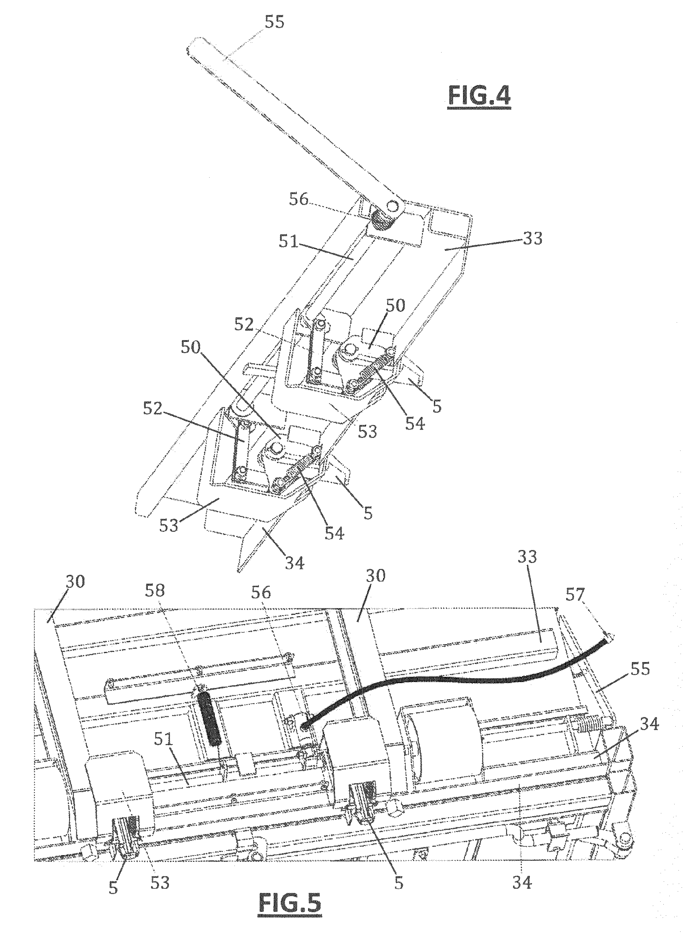

Pour les bennes amovibles, il est connu, comme illustré en figure 4, d'utiliser une poignée 55 d'actionnement des crochets de verrouillage 5. Cette poignée 55 est fixée à l'extrémité d'un arbre de commande 51 sur lequel sont articulées deux biellettes 52. Les biellettes 52 sont également articulées sur les crochets 5 respectifs afin que la rotation de l'arbre de commande 51, sous l'action de la poignée 55, provoque le pivotement des crochets 5 et ainsi le verrouillage ou le déverrouillage de la porte arrière (non illustrée) en fonction du sens de pivotement de ladite poignée 55. Ainsi, avec une telle poignée, les opérations de verrouillage et de déverrouillage de la porte arrière de la benne sont manuelles, obligeant le conducteur du véhicule à sortir de sa cabine pour venir actionner la poignée. Il se trouve en outre que la poignée est disposée à proximité de la porte arrière de la benne, d'où il s'ensuit que l'opérateur qui manoeuvre la poignée risque d'être atteint par la charge qui se vide hors de la benne, et en particulier d'être souillé par des projections de matières liquides dans le cas d'une charge en partie liquide.

L'état de la technique peut également être illustré par la figure 5, où une benne amovible comprend un dispositif d'actionnement hydraulique des crochets 5 de verrouillage. Pour ce faire, un vérin 56 hydraulique est fixé sur l'équipement afin de pouvoir entraîner en rotation l'arbre de commande 51 sur lequel sont articulées les deux biellettes 52. Ces biellettes 52 sont pour rappel également articulées sur les crochets 5 respectifs, de sorte que la rotation de l'arbre de commande 51, sous l'action du vérin 56, provoque le pivotement des crochets 5 et ainsi le verrouillage ou le déverrouillage de la porte arrière (non illustrée) en fonction du sens de déplacement du vérin 56. Pour alimenter le vérin 56 en fluide sous pression, une conduite 57 flexible est prévue entre le vérin 56 et un système hydraulique (non illustré), comprenant en général un distributeur hydraulique et une pompe hydraulique, fixé sur le châssis du véhicule. Ainsi, le conducteur peut actionner directement de sa cabine le distributeur hydraulique afin d'alimenter le vérin 56 qui verrouillera ou déverrouillera la porte arrière de la benne. L'inconvénient de ce dispositif hydraulique est qu'il nécessite une liaison hydraulique, ici la conduite 57 flexible, entre le véhicule et la benne amovible, de sorte qu'il est indispensable de débrancher ladite conduite 57 du vérin 56 lorsque la benne amovible est retiré du véhicule et déposé sur le sol, sous peine de provoquer l'arrachement de la conduite 56. Ce dispositif hydraulique présente l'inconvénient d'être très contraignant en termes d'utilisation et de précaution d'usage, en plus d'être coûteux avec l'emploi du vérin.

Le document US 6 648 420 B1 divulgue une benne amovible conçue pour être montée de façon amovible sur le châssis d'un camion, où cette benne amovible comporte un dispositif d'actionnement de l'ouverture de la porte arrière de la benne amovible. Ce dispositif d'actionnement comporte une tringle montée pivotante sur le châssis, une plaque pivotante montée pivotante sur l'extrémité supérieure de la tringle pivotante et dans laquelle est ménagée une encoche 82, un bras de liaison pivotant supportant à son extrémité inférieure un pion engagé dans l'encoche de la plaque pivotante, un bras de porte solidaire de la porte et monté pivotant sur l'extrémité supérieure du bras de liaison pivotant, et un ressort de rappel accroché d'un côté sur le pion et de l'autre côté sur un point d'ancrage prévu sur la benne amovible. En utilisation, le basculement de la benne amovible provoque le pivotement de la plaque pivotante qui entraîne le déplacement du bras de liaison pivotant et par conséquent l'ouverture de la porte arrière par rotation du bras de porte.

Le dispositif d'actionnement décrit dans ce document US 6 648 420 B1 présente de nombreux inconvénients. Tout d'abord, ce dispositif d'actionnement nécessite d'intervenir sur le véhicule, autrement dit de modifier ce véhicule par rajout de pièces telles que la tringle pivotante et la plaque pivotante qui sont montés sur le châssis du camion. Ensuite, seul le basculement de la benne amovible provoque la commande d'actionnement de l'ouverture de la porte arrière, limitant ainsi l'utilisation de ce dispositif d'actionnement à des bennes basculantes et au seul moment où la benne bascule.

Le document US 6 092 863 A divulgue également une benne amovible conçue pour être montée de façon amovible sur un camion, où cette benne amovible comporte un dispositif d'actionnement de l'ouverture de la porte arrière de la benne amovible. Ce dispositif d'actionnement comporte un bras de balancier monté pivotant sur le camion et un bras formant crochet articulée à son extrémité supérieure sur la porte arrière. Ce dispositif d'actionnement est conçu pour ouvrir automatiquement la porte arrière quand la benne bascule de la position de transport vers la position basculée, par engagement du bras formant crochet avec le bras de balancier.

Le dispositif d'actionnement décrit dans ce document US 6 092 863 A présente les mêmes inconvénients que celui décrit dans le document US 6 648 420 B1. En effet, ce dispositif d'actionnement nécessite d'intervenir sur le camion en montant le bras de balancier sur ce camion. De plus, seul le basculement de la benne amovible provoque la commande d'actionnement de l'ouverture de la porte arrière, limitant ainsi l'utilisation de ce dispositif d'actionnement à des bennes basculantes et au seul moment où la benne bascule.

Le document US 5 100 279 A divulgue une benne amovible conçue pour être montée de façon amovible sur le châssis d'un camion. Cette benne amovible comporte un dispositif d'actionnement de l'ouverture de la porte arrière de la benne amovible, où ce dispositif d'actionnement comporte, d'une part, un vérin hydraulique monté pivotant sur le châssis du camion et équipé d'un bras de piston et d'une pièce formant came en forme de « C » qui est montée sur l'extrémité libre du bras de piston et, d'autre part, un bras formant crochet articulée sur la porte. Ce dispositif d'actionnement est conçu pour à la fois ouvrir la porte et faire basculer la benne amovible vers l'arrière. Ce dispositif d'actionnement nécessite d'intervenir sur le camion en montant le vérin hydraulique sur le camion.

L'un des objectifs de la présente invention est de résoudre en tout ou partie ces inconvénients en fournissant un équipement amovible de transport d'une charge équipé d'un dispositif d'actionnement d'un organe fonctionnel qui soit simple d'utilisation et de montage, peu coûteux, manipulable à distance (en particulier de la cabine de pilotage du véhicule), automatique, et qui ne nécessite pas de liaison directe entre l'équipement amovible et le véhicule de sorte que le retrait de l'équipement amovible hors du véhicule peut se faire aisément, sans précaution supplémentaire et sans risque de dégrader le dispositif d'actionnement.

A cet effet, l'invention propose un équipement amovible de transport d'une charge, notamment du type benne amovible, conçu pour être monté de façon amovible sur un véhicule et être verrouillé sur ledit véhicule au moyen d'au moins un verrou d'immobilisation dudit équipement sur ledit véhicule, ledit équipement étant apte à se déplacer linéairement selon une direction longitudinale sur ledit véhicule entre une position dite de transport et au moins une autre position dite d'arrêt et comprenant au moins un dispositif d'actionnement d'un organe fonctionnel monté sur l'équipement, l'équipement amovible étant remarquable en ce que le dispositif d'actionnement comprend :
- au moins un moyen de commande fixé sur une zone prédéterminée de l'équipement afin que ledit moyen de commande soit disposé en vis-à-vis du verrou dans la position d'arrêt de l'équipement pour que le verrou puisse pousser le moyen de commande lorsqu'il immobilise ledit équipement dans cette position d'arrêt ; et
- des moyens de raccordement dudit moyen de commande audit organe fonctionnel conçus pour convertir la poussée du verrou sur le moyen de commande en une commande d'actionnement dudit organe fonctionnel.

Ainsi, le dispositif d'actionnement de l'équipement comprend un moyen de commande qui sera rapporté dans une zone judicieusement choisie pour agir avec le verrou existant sur le véhicule, afin que ce soit le verrou qui amorce l'actionnement de l'organe fonctionnel. En utilisation, il suffit donc au conducteur de déverrouiller l'équipement amovible, en ouvrant les verrous, de déplacer l'équipement amovible jusqu'à placer l'organe de commande en face du verrou adéquat, et enfin de verrouiller l'équipement amovible en fermant les verrous, dont l'un viendra pousser le moyen de commande ce qui aura pour effet d'actionner l'organe fonctionnel via les moyens de raccordement.

Avec un tel dispositif, il n'existe aucun lien mécanique ou hydraulique ou autre entre l'équipement amovible et le véhicule, hormis les verrous qui sont toujours présents avec un équipement amovible supporté par un véhicule ; l'invention utilisant justement un verrou existant pour permettre d'actionner un organe fonctionnel. Ainsi, il est inutile d'intervenir sur le véhicule, sachant qu'une telle intervention nécessite un transport et une immobilisation longue et coûteuse du véhicule, et risque de remettre en cause le carrossage du véhicule et l'autorisation légale nationale de circuler.

Le montage du dispositif d'actionnement est aisé, il suffit d'une part de fixer le moyen de commande dans une zone adaptée pour coopérer avec l'un des verrous, et d'autre part de raccorder ce moyen de commande à l'organe fonctionnel. Le moyen de commande doit présenter une forme et des dimensions adéquates pour que le verrou puisse coopérer correctement avec ledit moyen de commande sans pour autant pousser ledit organe de commande dans toutes les positions de l'équipement sur le châssis porteur. De plus, l'organe de commande doit être dimensionné pour ne pas gêner le verrou dans sa fonction première de verrouillage de l'équipement amovible, notamment en étant le moins encombrant possible.

En outre, les moyens de raccordement sont entièrement montés sur l'équipement amovible, et peuvent par exemple être du type mécanique ou électrique.

Lors du retrait de l'équipement amovible hors du véhicule, et ainsi lors de sa pose sur le sol, il ne se présente ainsi aucun problème car la totalité du dispositif d'actionnement est fixé sur l'équipement amovible, de sorte qu'il n'est nécessaire de prendre aucune précaution avec le dispositif d'actionnement préalablement audit retrait.

L'invention concerne plus particulièrement un équipement amovible conçu pour être monté sur un dispositif de bras hydraulique comprenant une partie fixe fixée sur le véhicule et une partie mobile articulée sur la partie fixe et apte à déplacer l'équipement amovible, ladite partie mobile supportant au moins un verrou d'immobilisation dudit équipement amovible sur ladite partie mobile du dispositif de bras hydraulique.

Dans une réalisation particulière, le moyen de commande comprend un organe mobile monté de façon mobile sur ladite zone de l'équipement de sorte qu'une poussée du verrou puisse provoquer le déplacement de l'organe mobile entre une première et une deuxième position.

Dans cette réalisation, le dispositif de commande est du type mécanique avec un organe mobile monté de façon mobile, par exemple en rotation ou en basculement ou en translation, sur la zone prédéterminée de l'équipement amovible.

Dans une réalisation avantageuse, notamment en terme de montage, l'organe mobile est monté à pivot sur la zone de l'équipement autour d'un axe d'articulation, de sorte qu'une poussée du verrou puisse provoquer le pivotement dudit organe de commande.

Selon une caractéristique, les moyens de raccordement comprennent un système mécanique de transmission du déplacement de l'organe de commande à destination de l'organe fonctionnel.

Ce système mécanique de transmission est ainsi prévu pour convertir le déplacement (par exemple en rotation ou en basculement ou en translation) de l'organe de commande en une commande de l'organe fonctionnel ; ledit système mécanique pouvant être du type commande par câble, par tringlerie, par poulie ou similaire.

Selon une autre caractéristique, le système mécanique de transmission comprend un système de renvoi, notamment du type système à poulie ou inverseur rotatif ou système à biellette ou système câble/gaine, relié d'une part à l'organe de commande et relié d'autre part à l'organe fonctionnel.

En effet, vu que les verrous se ferment généralement sur les côtés latéraux externes (respectivement gauche et droite) de l'équipement amovible, il peut être nécessaire d'employer un tel système de renvoi pour effectuer une commande d'un organe fonctionnel situé à distance des verrous.

Dans une autre réalisation particulière, le moyen de commande comprend un interrupteur électrique de sorte qu'une poussée du verrou sur ledit interrupteur puisse établir ou interrompre le passage d'un courant électrique. Dans cette réalisation, le dispositif de commande est du type électrique avec un interrupteur monté fixement sur la zone prédéterminée de l'équipement. Dans ce cas, les moyens de raccordement peuvent comprendre une liaison électrique entre l'interrupteur et l'organe fonctionnel.

De manière générale, il est possible d'envisager d'autres modes de réalisation du moyen de commande, comme par exemple et de façon non limitative sous la forme d'un contacteur de type hydraulique, pneumatique ou électrique comprenant notamment une vanne, un by-pass, un tiroir de distribution ou un interrupteur.

Il est ainsi envisageable de commander à distance, de façon automatique, un moteur, notamment électrique ou thermique, monté sur l'équipement amovible.

Par exemple, dans le cas d'une bétonnière amovible, comprenant un réservoir incliné mobile en rotation pour le brassage du béton, l'organe fonctionnel actionnable à distance peut correspondre au moteur d'entraînement du réservoir de malaxage, afin que le dispositif d'actionnement puisse actionner ledit moteur d'entraînement par une simple manoeuvre effectuée par le conducteur dans la cabine. Comme mentionné ci-avant, il suffit au conducteur de déplacer la bétonnière amovible pour que le verrou soit en face du moyen de commande (par exemple réalisé sous la forme d'un interrupteur), puis de fermer ledit verrou sur ledit moyen de commande pour que le moteur soit actionné.

Dans un mode de réalisation, l'équipement comporte un berceau apte à se déplacer en translation selon la direction longitudinale sur le véhicule, notamment au moyen d'un bras d'actionnement fixé sur le véhicule, le berceau présentant une première zone de verrouillage destinée à coopérer avec le verrou lorsque le berceau est en position de transport, et au moins une deuxième zone de verrouillage, décalée par rapport à la première zone de verrouillage selon la direction longitudinale, destinée à coopérer avec le verrou lorsque le berceau est en position d'arrêt, et le moyen de commande est disposé sur la deuxième zone de verrouillage de sorte que, en utilisation sur le véhicule, le verrou se ferme :
- sur la première zone de verrouillage dans la position de transport ; et
- sur la deuxième zone de verrouillage dans la position d'arrêt tout en coopérant avec le moyen de commande afin d'actionner l'organe fonctionnel.

Dans une certaine réalisation, l'équipement constitue une benne amovible comprenant une porte arrière et au moins un organe de verrouillage de ladite porte arrière, et dans lequel l'organe fonctionnel correspond audit organe de verrouillage de la porte arrière afin que le dispositif d'actionnement puisse actionner le déverrouillage de la porte arrière lors de la poussée du verrou sur le moyen de commande.

L'invention a également trait à un véhicule sur lequel est monté de façon amovible un équipement amovible conforme à l'invention, ledit véhicule comportant au moins un verrou d'immobilisation dudit équipement sur ledit véhicule et des moyens de mise en déplacement conçus pour déplacer linéairement ledit équipement selon la direction longitudinale sur ledit véhicule entre la position de transport et la position d'arrêt.

Dans une réalisation particulière, les moyens de mise en déplacement comportent un dispositif de bras hydraulique fixé sur un châssis porteur du véhicule, ce dispositif de bras hydraulique comportant :
- une partie fixe, notamment du type faux-châssis, fixée sur le châssis porteur ;
- une partie mobile articulée sur la partie fixe et conçue pour déplacer linéairement l'équipement par rapport à la partie fixe et pour faire pivoter ou basculer l'équipement vis-à-vis de la partie fixe et du châssis porteur ; et
- le au moins un verrou qui est monté sur la partie mobile entre une position de verrouillage et une position de déverrouillage de l'équipement sur la partie mobile, ledit verrou étant conçu pour :
   - dans sa position de verrouillage, immobiliser l'équipement sur la partie mobile lors d'un pivotement ou basculement de l'équipement vis-à-vis de la partie fixe et du châssis porteur ;
   - dans sa position de déverrouillage, autoriser le déplacement linéaire de l'équipement entre la position de transport et la position d'arrêt, ledit verrou ne suivant pas le mouvement de déplacement linéaire de l'équipement mais restant fixe sur la partie mobile, de sorte que ledit verrou se ferme sur deux zones distinctes de verrouillage de l'équipement entre la position de transport et la position d'arrêt.

Selon une caractéristique, le dispositif de bras hydraulique est conçu pour au moins les trois modes de fonctionnement suivants :
- un premier fonctionnement dans lequel le verrou est en position de déverrouillage et la partie mobile est déplacée par rapport à la partie fixe pour déposer l'équipement au sol ou inversement pour charger l'équipement du sol sur le véhicule ;
- un deuxième fonctionnement dans lequel le verrou est en position de verrouillage et la partie mobile est déplacée en rotation vers l'arrière du véhicule afin de basculer l'équipement vers l'arrière du véhicule, ledit équipement restant verrouillée sur la partie mobile du dispositif de bras hydraulique par le verrou pendant ce basculement ; et
- un troisième fonctionnement dans lequel le verrou est en position de verrouillage et la partie mobile est maintenue horizontalement sur le véhicule pour le transport de l'équipement, ledit équipement occupant la position de transport.

L'invention concerne également un procédé de montage d'un dispositif d'actionnement d'un organe fonctionnel sur un équipement amovible de transport d'une charge, notamment du type benne amovible, ledit équipement étant conçu pour être monté de façon amovible sur un véhicule et être verrouillé sur ledit véhicule au moyen d'au moins un verrou d'immobilisation dudit équipement sur ledit véhicule, et ledit équipement étant apte à se déplacer linéairement sur ledit véhicule entre une position dite de transport et au moins une autre position dite d'arrêt, ledit procédé comprenant les étapes suivantes :
- fixer au moins un moyen de commande sur une zone prédéterminée de l'équipement afin que ledit moyen de commande soit disposé en vis-à-vis du verrou dans la position d'arrêt de l'équipement pour que le verrou puisse pousser le moyen de commande lorsqu'il immobilise ledit équipement dans cette position d'arrêt ; et
- raccorder le moyen de commande à l'organe fonctionnel via les moyens de raccordement afin de pouvoir convertir la poussée du verrou sur le moyen de commande en une commande d'actionnement dudit organe fonctionnel.

Un tel procédé de montage est simple à mettre en oeuvre, il suffit principalement de déterminer la zone adéquate de fixation du moyen de commande, en prenant par exemple des mesures de la course de déplacement de l'équipement amovible sur le véhicule, comme par exemple sur le châssis porteur ou en particulier sur le faux-châssis de support d'un bras hydraulique. Il suffit ensuite de fixer le moyen de commande sur cette zone, par exemple par soudage, vissage, boulonnage, collage ou équivalent.

L'étape de fixation consiste par exemple à monter mobile (par exemple à pivot, à basculement, ou à translation) un organe mobile du moyen de commande sur la zone prédéterminée de l'équipement afin que la poussée du verrou sur ledit organe de commande provoque le déplacement dudit organe mobile.

L'étape de raccordement peut consister quant à elle à relier mécaniquement l'organe mobile à l'organe fonctionnel afin que le déplacement de cet organe mobile consécutif à la poussée du verrou déclenche le fonctionnement dudit organe fonctionnel.

Dans une application particulière, l'étape de raccordement consiste à raccorder ledit moyen de commande à au moins un organe de verrouillage d'une porte arrière de l'équipement afin que le moyen de commande déclenche le déverrouillage de la porte arrière lors de la poussée du verrou.

D'autres caractéristiques et avantages de la présente invention apparaîtront à la lecture de la description détaillée ci-après, d'un exemple de mise en oeuvre non limitatif, faite en référence aux figures annexées dans lesquelles :
- la figure 1 est une vue de côté d'un véhicule, du type camion, portant un équipement amovible de transport d'une charge, du type benne amovible, où la benne amovible est susceptible de faire l'objet d'un procédé de montage d'un dispositif de commande conforme à l'invention, afin d'être transformé en une benne amovible conforme à l'invention, et où ladite benne amovible est dans une position de transport ;
- la figure 2 est une vue de côté du véhicule illustré en figure 1 avec la benne amovible dans une position d'arrêt ;
- la figure 3 est une vue de côté du véhicule illustré aux figures 1 et 2 avec la benne amovible dans une position d'arrêt et où la benne est basculée ;
- la figure 4 est une vue en perspective de dessous d'un dispositif manuel d'actionnement de l'état de la technique, pour l'actionnement d'organes de verrouillage d'une porte arrière d'une benne amovible ;
- la figure 5 est une vue en perspective de dessous d'un dispositif hydraulique d'actionnement de l'état de la technique, pour l'actionnement d'organes de verrouillage d'une porte arrière d'une benne amovible ;
- la figure 6a est une vue partielle en perspective de dessous du berceau d'une benne amovible conforme à l'invention sur lequel est monté un dispositif d'actionnement conçu pour l'actionnement d'organes de verrouillage d'une porte arrière de la benne amovible, où les organes de verrouillage sont en position fermée de verrouillage ;
- la figure 6b est une vue partielle en perspective de dessous du berceau de la benne amovible illustré en figure 6a, dans la même position fermée des organes de verrouillage, selon un autre angle de vue ;
- la figure 6c est une vue partielle en perspective de dessus du berceau de la benne amovible illustré aux figures 6a et 6b, dans la même position fermée des organes de verrouillage ;
- les figures 7a à 7c sont des vues identiques aux figures 6a à 6c respectivement du berceau de la benne amovible conforme à l'invention, sur lequel est monté un dispositif d'actionnement et où les organes de verrouillage sont en position ouverte de déverrouillage ;
- la figure 8 est une vue de côté du berceau de la benne amovible conforme à l'invention, où les organes de verrouillage sont en position fermée ;
- la figure 9 est une vue de dessus, aux dimensions réduites, du berceau de la benne amovible conforme à l'invention, où les organes de verrouillage sont en position fermée ;
- la figure 10 est une vue en coupe longitudinale du berceau de la benne amovible conforme à l'invention, selon l'axe X-X de la figure 9 ;
- la figure 11a est une vue de dessus, aux dimensions réduites, du berceau de la benne amovible conforme à l'invention, où les organes de verrouillage sont en position ouverte ;
- la figure 11b est une vue en coupe transversale du berceau de la benne amovible conforme à l'invention, selon l'axe XI-XI de la figure 11a ;
- la figure 12a est une vue de dessus, aux dimensions réduites, du berceau de la benne amovible conforme à l'invention, où les organes de verrouillage sont en position fermée ;

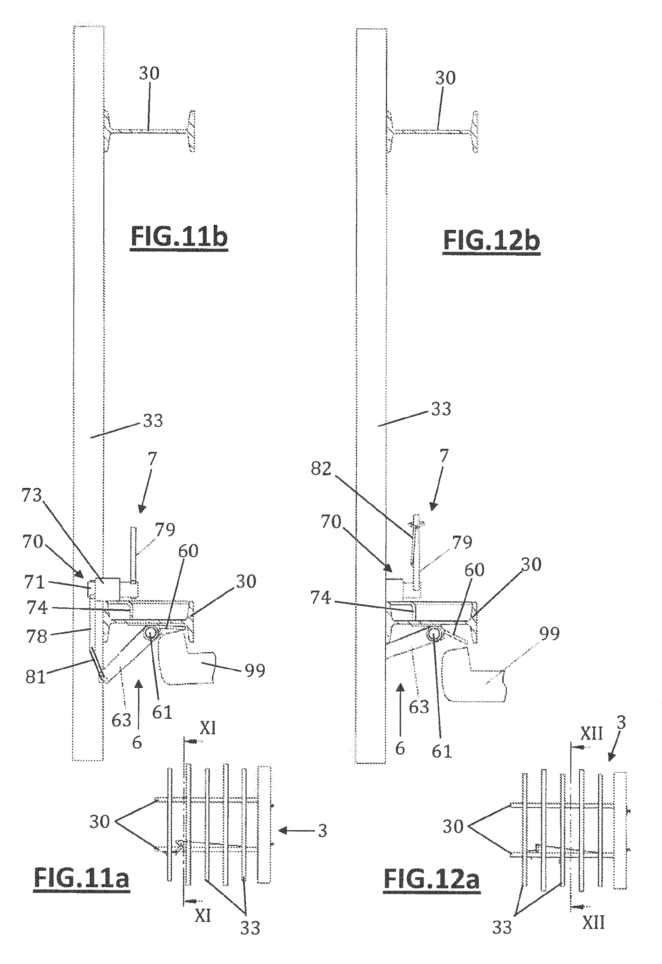

- la figure 11b est une vue en coupe transversale du berceau de la benne amovible conforme à l'invention, selon l'axe XII-XII de la figure 12a ;

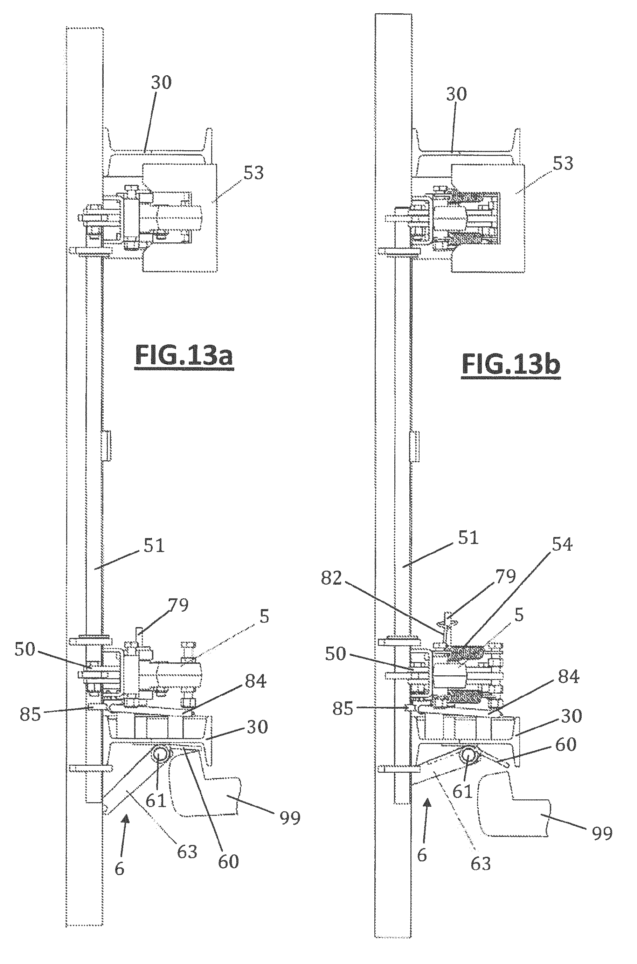

- les figures 13a et 13b sont des vues de face de l'arrière du berceau de la benne amovible conforme à l'invention, en position respectivement ouverte et fermée ;

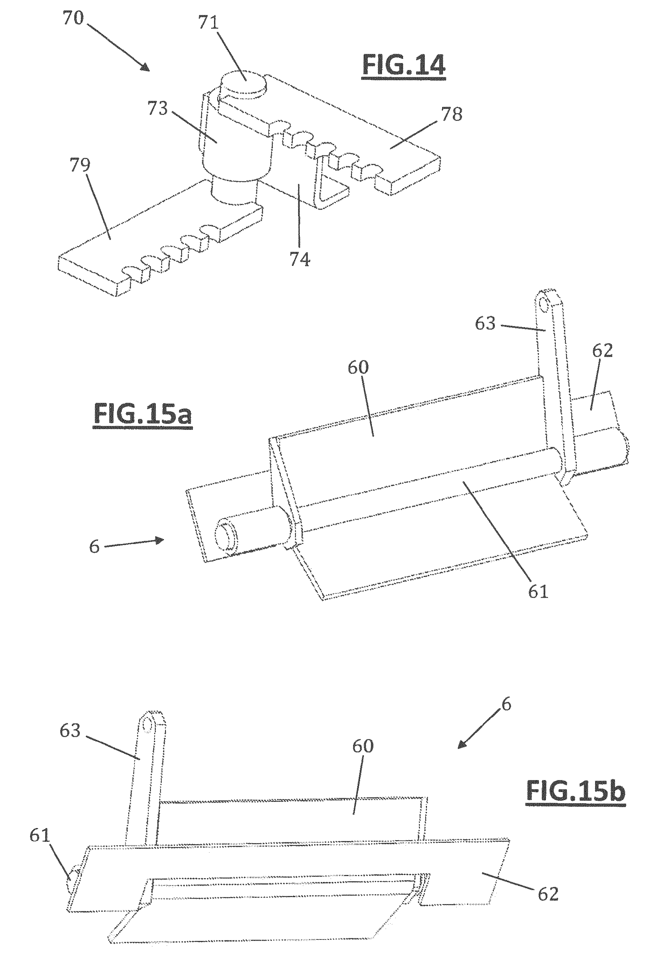

- la figure 14 est une vue en perspective d'un inverseur rotatif formant système de renvoi pour un dispositif d'actionnement équipant une benne amovible conforme à l'invention ;
- les figures 15a et 15b sont des vues en perspectives selon deux angles de vue distinct d'une palette de commande pour un dispositif d'actionnement équipant une benne amovible conforme à l'invention

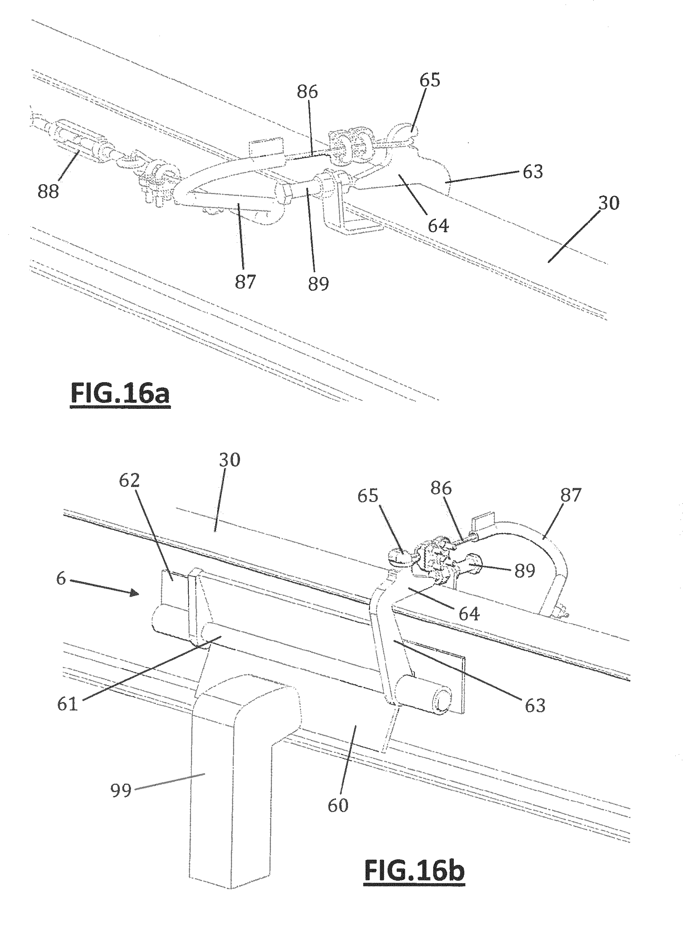

- les figures 16a et 16b sont des vues en perspective du berceau d'une variante de réalisation d'une benne amovible conforme à l'invention.

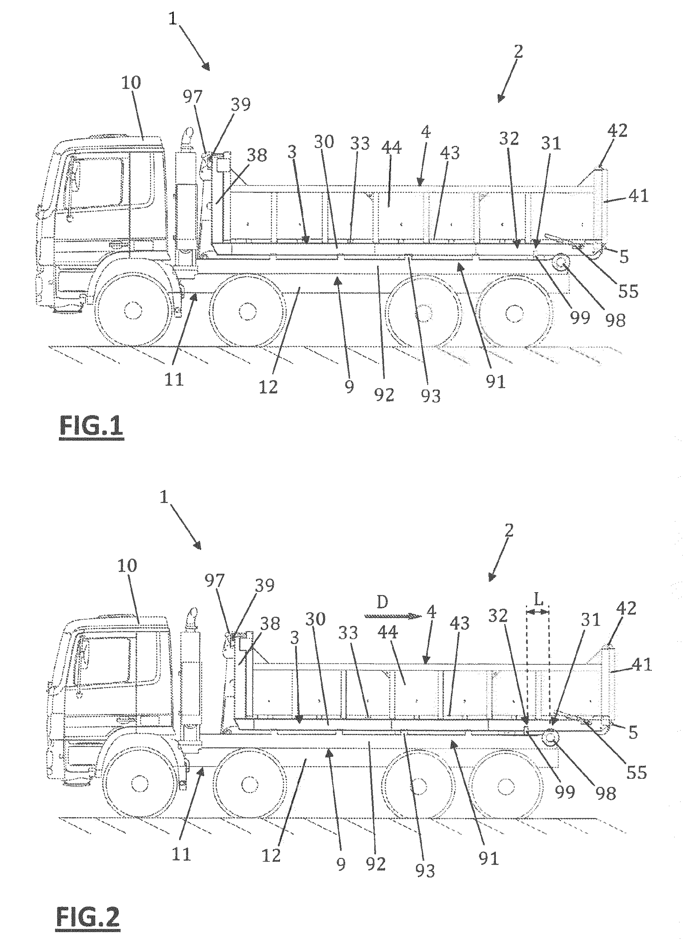

Les figures 1 à 3 illustrent un véhicule 1 du type camion qui comporte, derrière une cabine 10, un châssis porteur 11 sur lequel est fixé un dispositif de bras hydraulique 9.

Le châssis porteur 11 comporte deux longerons 12 s'étendant selon la direction longitudinale du véhicule, de l'avant vers l'arrière, respectivement à la droite et à la gauche du camion 1.

Le dispositif de bras hydraulique 9 comporte une partie fixe ou structure du type faux-châssis 91 fixé sur le châssis porteur 11 et comprenant :
- deux longerons 92 s'étendant selon la direction longitudinale et fixés sur les longerons 12 du châssis porteur 11, notamment au moyen de plaques de liaison (non illustrées) boulonnées, vissées, ou soudées sur les longerons 12, 92 respectifs ; et éventuellement
- des guides 93 s'étendant dans la largeur du berceau 3 entre les deux longerons 92, chaque guide 93 étant fixé, notamment par soudure, à chacun des longerons 92, ces guides 93 servant à positionner et maintenir les longerons 30 d'un berceau 3 (décrits ultérieurement) dans la largeur.

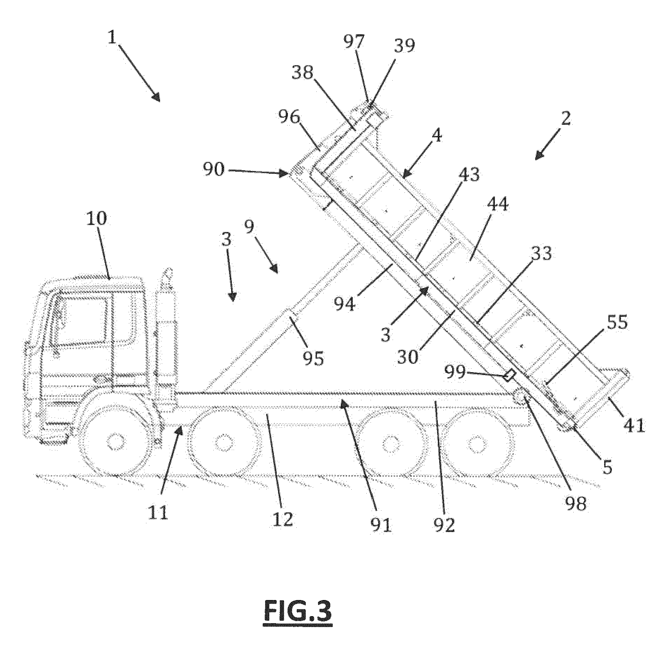

Le dispositif de bras hydraulique 9 comprend en outre une partie mobile 90 (parfois appelée bras hydraulique) qui est articulée sur le faux-châssis 91 et qui comprend, de manière connue, en référence à la figure 3 :
- un fourreau 94 monté à rotation sur le faux-châssis 91 et déplaçable au moyen de un ou plusieurs vérins hydrauliques 95, le ou les vérins hydrauliques 95 étant articulés à une extrémité sur le faux-châssis 91 et l'autre extrémité sur le fourreau 94 ;
- une potence 96 télescopique comportant deux parties à angle droit, respectivement une première partie montée à coulissement dans le fourreau 94 et déplaçable dans le fourreau 94 par des moyens adaptés, et une deuxième partie (formant le bras proprement dit) et pourvue à son extrémité libre d'un crochet 97 de préhension, les première et deuxième parties de ladite potence 96 pouvant soit être solidaires l'une de l'autre soit articulées l'une par rapport à l'autre.

Bien entendu, la partie mobile 90 n'est pas limité à celle illustrée sur les figures. Par exemple, la partie mobile 90 peut comprendre une potence articulée en un ou plusieurs points et/ou la potence peut comprendre ou pas un fourreau à l'intérieur duquel ladite potence coulisse et/ou comporte un ou plusieurs vérins de déplacement de la partie mobile 90 vis-à-vis du faux-châssis 91.

Le camion 1 comprend un équipement amovible 2, du type benne amovible, monté de façon amovible sur le dispositif de bras hydraulique 9 ; ladite benne amovible 2 pouvant être verrouillée sur la partie mobile 90 du dispositif de bras hydraulique 9 au moyen d'au moins un verrou 99 d'immobilisation de la benne amovible 2.

La benne amovible 2 comporte un contenant 4 construit autour d'une structure appelée berceau ou berce 3 pouvant être posée sur le camion 1, et en particulier sur le dispositif de bras hydraulique 9, basculée et déposée sur le sol au moyen dudit dispositif de bras hydraulique 9.

La berce 3 de la benne amovible 2 comporte :
- deux longerons 30 coiffant la partie mobile 90 du dispositif de bras hydraulique 9 sur laquelle la berce 3 peut être immobilisée au moyen de verrous 99 ;
- plusieurs traverses 33 s'étendant dans la largeur de la berce 3 entre les deux longerons 30, chaque traverse 33 étant fixée, notamment par soudure, à chacun des longerons 30 (lesdites traverses 33 étant optionnelles pour la berce 3) ;
- une chapelle de préhension 38 solidaire des longerons 30 et formant la partie avant (ou frontale) de la berce 3, ladite chapelle de préhension 38 s'étendant perpendiculairement par rapport aux longerons 30 ; et
- un axe ou anneau de préhension 39 fixé sur la chapelle de préhension 38 pour permettre la préhension de la berce 3, et de la benne amovible 2 en générale, par le crochet 97 du dispositif de bras hydraulique 9.

Comme visible en figure 3, la partie mobile 90 est articulée en rotation sur ledit faux-châssis 91, en partie arrière de ce faux-châssis 91, afin de pouvoir basculer la benne amovible 2 vers l'arrière du camion 1. Le dispositif de bras hydraulique 9 comprend en outre des galets 98 disposés en partie arrière, à proximité de l'axe de rotation de la partie mobile 90 sur le faux-châssis 91, afin de supporter la benne amovible 2.

D'une manière générale, le dispositif de bras hydraulique 9 est conçu pour au moins les trois modes de fonctionnement suivants :
- un premier fonctionnement (non illustré) dans lequel les verrous 99 sont ouverts et la partie mobile 90 est déplacée par rapport au faux-châssis 91 pour déposer la benne amovible 2 au sol ou inversement pour charger la benne amovible 2 du sol sur le camion 1. Dans ce fonctionnement, il est nécessaire d'amener la benne amovible 2 au maximum en porte à faux arrière par rapport aux galets 98 et permettre ainsi le basculement de la benne amovible 2 et donc sa dépose au sol, notamment lorsque son porte à faux dépassera la moitié de la longueur de la benne amovible 2.
- un deuxième fonctionnement (illustré en figure 3) dans lequel les verrous 99 sont fermés et la partie mobile 90 est déplacée en rotation vers l'arrière afin de basculer la benne amovible 2 vers l'arrière du camion 1 , dans le but notamment de vider la benne amovible 2 de son contenu, ladite benne amovible 2 restant bien entendu verrouillée sur la partie mobile 90 du dispositif de bras hydraulique.
- un troisième fonctionnement (illustré en figure 1) dans lequel les verrous 99 sont fermés et la partie mobile 90 est maintenue horizontalement sur le camion 1 pour le transport de la benne amovible 2 lors du déplacement du camion 1.

Les longerons 30 du berceau 3 de la benne amovible 2 sont en appui sur le dispositif de bras hydraulique 9 par l'intermédiaire d'un appui de l'anneau de préhension 39 dans le crochet 97 et de plusieurs autres appuis sur les guides 93 (dans les deuxième et troisième fonctionnements lorsque les verrous 99 sont fermés sur les longerons 30) ou sur les galets 98 (dans le premier fonctionnement lorsque les verrous 99 sont ouverts).

Les verrous 99, autrement appelés pinces, font partie du dispositif de bras hydraulique 9 et sont montés sur la partie mobile 90 du dispositif de bras hydraulique 9. Les verrous 99 sont montés mobiles sur cette partie mobile 90 entre une position de verrouillage (ou position fermée) et une position de déverrouillage (ou position ouverte) de la benne amovible 2. Ces verrous 99 sont avantageusement du type hydraulique, mais ils peuvent également être du type pneumatique, électrique ou similaire. Dans le mode de réalisation illustré sur les figures, les verrous 99 sont déplaçables en translation dans la direction transversale du camion 1, autrement dit dans le sens de la largeur du camion 1. Dans une variante non illustrée, les verrous 99 sont montés à rotation sur la partie mobile 90 autour d'axes longitudinaux respectifs parallèle aux longerons 92. Les verrous 99 présentent une forme générale de crochet, notamment en forme de « r », avec deux parties inclinées l'une par rapport à l'autre, notamment à angle droit.

Comme visible notamment aux figures 11 à 13, les longerons 30 sont des profilés de section sensiblement en forme de « I » avec deux ailes parallèles, respectivement inférieure et supérieure, reliées entre elles par une âme centrale ; les verrous 99 se verrouillant sur les ailes inférieures de ces longerons 30. Dans une variante non illustrée, les longerons 30 peuvent être des profilés de section sensiblement en forme de « C ».

Le contenant 4, formant la benne proprement dite, présente un plancher 43 reposant sur les traverses 33 du berceau 3 et une paroi latérale 44 faisant le tour du contenant 4 afin de former ensemble un conteneur de stockage d'une charge ; ledit contenant 4 étant solidarisé au berceau 3, notamment par soudage, boulonnage, vissage ou tout autre moyen équivalent. Le contenant 4 comporte une porte arrière 41 articulée par son côté supérieur 42, autrement en partie haute, sur le contenant 4. Le berceau 3 supporte, sur sa partie arrière, des organes de verrouillage 5, du type crochet ou cliquet, pour verrouiller la porte arrière 41 dans sa partie basse.

En figure 1, la benne amovible 2 est en position de transport sur le camion 1, c'est-à-dire que la benne amovible 2 est proche de la cabine 10. Dans cette position de transport, le verrou 99 est fermé ou verrouillé sur une première zone 31 du longeron 30. Dans cette position d'arrêt, le fourreau 94 est à l'horizontale, tout comme le plancher 40 du contenant 4 et les longerons 30 de la berce 3.

En figure 2, la benne amovible 2 est en position d'arrêt sur le camion 1, c'est-à-dire que la benne amovible 2 a été reculé ou éloigné par rapport à la cabine 10, selon un déplacement linéaire illustré par la flèche D par rapport à la position de transport de la figure 1 ; ce déplacement linéaire s'effectuant selon la direction longitudinale du véhicule, qui correspond à la direction longitudinale de la benne amovible 2. Pour permettre un tel déplacement linéaire D de la benne amovible 2 vis-à-vis du camion 1, et en particulier vis-à-vis du faux-châssis 91 et du châssis porteur 11, il suffit de faire coulisser la potence 96 télescopique dans le fourreau 94 afin de déplacer vers l'arrière du camion 1 le crochet 97 de préhension et la benne amovible 2 qui suit le mouvement. Dans une variante non illustrée, avec une potence articulée non télescopique, il suffit, pour permettre un tel déplacement linéaire D de la benne amovible 2, d'entraîner en rotation une partie articulée de la potence (avec un vérin par exemple) de sorte que ladite benne 2 se déplace linéairement pendant que l'anneau de préhension 34 glisse dans le crochet 97. Dans cette variante, le recul ou déplacement D est rendu possible par le fait que le crochet 97 possède une gorge importante adaptée pour absorber la composante verticale du déplacement due à la rotation de la potence.

Entre la position de transport et la position d'arrêt, il est nécessaire d'ouvrir ou déverrouiller les verrous 99 des longerons 30, en les déplaçant vers l'extérieur du camion 1. Ensuite, dans la position d'arrêt, les verrous 99 sont fermés ou verrouillés sur une deuxième zone 32 du longeron 30. La deuxième zone 32 est décalée vers l'avant du longeron 30, dans le sens de la longueur de l'équipement 2 et du camion 1 (autrement dit selon la direction longitudinale du véhicule 1 et de la benne amovible 2), par rapport à la première zone 31 d'une longueur L. En effet, les verrous 99 ne suivent pas le mouvement de déplacement linéaire de la benne amovible 2, mais ils restent fixes sur la partie mobile 90 du dispositif de bras hydraulique 9, contrairement à la potence 96 et au crochet 97 qui se déplacent (en rotation et/ou en coulissement) afin de déplacer linéairement la benne amovible 2 sur ladite partie mobile 90 maintenue horizontale.

En figure 3, la benne amovible 2 est basculée vers l'arrière du camion 1 avec les verrous 99 en position fermée de verrouillage sur la deuxième zone 32 du longeron 30. Le ou les vérins hydrauliques 95 sont activés pour faire basculer la partie mobile 90, conduisant ainsi au basculement de la berce 3 et de la benne amovible 2 dans son ensemble. Le dispositif de bras hydraulique 9 peut comprendre d'autres systèmes d'entraînement et/ou d'articulation pour permettre le basculement de la benne amovible 2 sur le sol.

Les figures 4 et 5 illustrent deux modes de réalisation de dispositifs d'actionnement de deux crochets 5 de verrouillage dans une benne amovible existante. Dans les deux modes de réalisation, les crochets 5 sont montés pivotants sur des supports 50 qui sont eux-mêmes fixés, notamment par soudage, sur une poutre 34 transversale qui est fixée sur la dernière des traverses 33 du berceau 3, à l'extrémité arrière dudit berceau 3. Un arbre de commande 51 est monté pivotant sur la poutre 34 et deux biellettes 52 sont articulées à une extrémité sur l'arbre de commande 51 et à l'autre extrémité sur les crochets 5 respectifs. Deux sabots de protection 53 enveloppent les respectivement deux ensembles biellette 52 et crochet 5 ; les sabots 53 étant fixés sur la poutre 34 et pourvues d'une fente de passage des crochets 5 respectifs. Suivant le sens de pivotement de l'arbre de commande 51, les crochets 5 pivotent soit vers le bas pour occuper une position ouverte (ou de déverrouillage), soit vers le haut pour occuper une position fermée (ou de verrouillage) ; le mouvement de pivotement de l'arbre de commande 51 autour de son propre axe étant transmis aux crochets 5 via les biellettes 52 respectives. Des ressorts hélicoïdaux 54 de rappel sont également prévus entre les supports 50 et les crochets 5 respectifs afin de rappeler les crochets 5 en position fermée.

Dans le mode de réalisation illustré en figure 4, une poignée 55 est prévue à l'une des extrémités de l'arbre de commande 51 afin qu'un opérateur puisse agir sur ladite poignée 55 et entraîner en rotation l'arbre de commande 51 pour pouvoir verrouiller ou déverrouiller la porte arrière de la benne. Un ressort concentrique 56 peut être monté autour de l'arbre de commande 51 à proximité de la poignée 55 afin de rappeler les crochets 5 dans la position fermée. Une telle poignée 55 est également visible sur les figures 1 à 3.

Dans le mode de réalisation illustré en figure 5, un dispositif hydraulique d'actionnement des crochets 5 est prévu en supplément de la poignée 55. Ce dispositif hydraulique comprend un vérin 56 hydraulique fixé sur le berceau 3, et en particulier sur l'une des traverses 33 et/ou sur la poutre 34, et alimenté en fluide sous pression par une conduite 57 hydraulique flexible mettant en communication le vérin 56 avec un système hydraulique (non illustrée) fixé sur le châssis porteur du véhicule. Un ressort 58 hélicoïdal de rappel est également prévu entre l'arbre de commande 51 et une traverse 33, où ledit ressort s'étend sensiblement parallèlement au vérin 56 pour pouvoir rappeler les crochets 5 dans la position fermée.

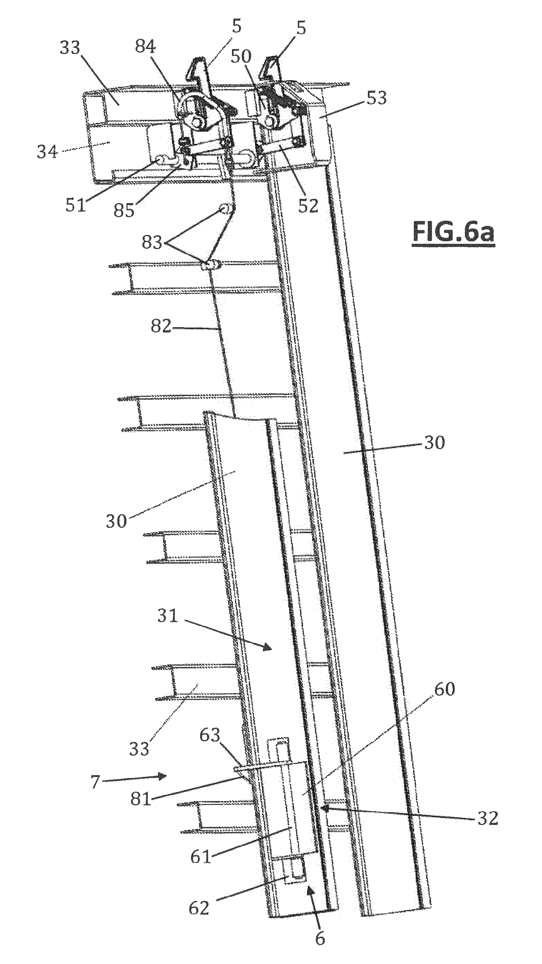

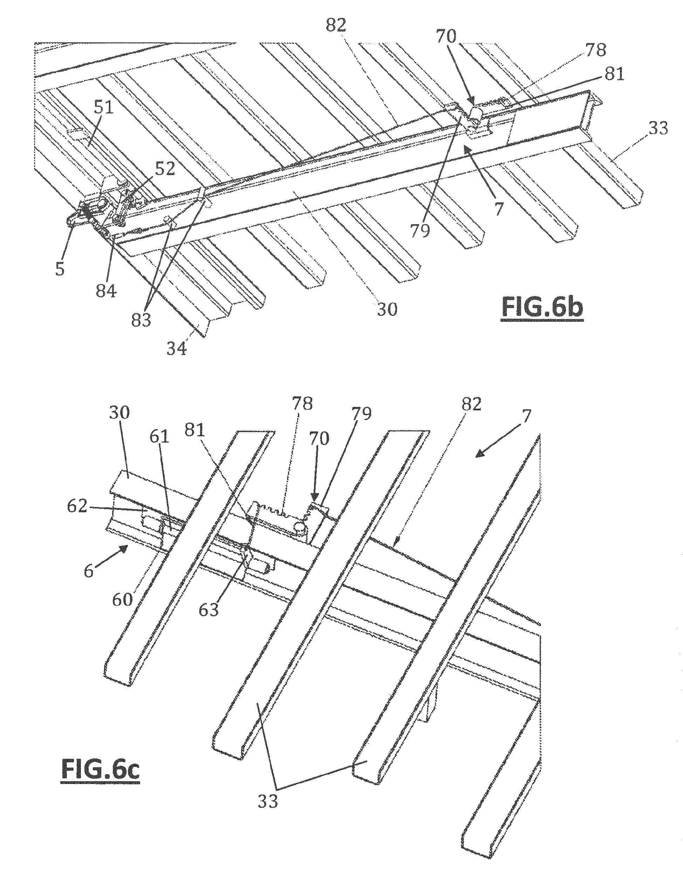

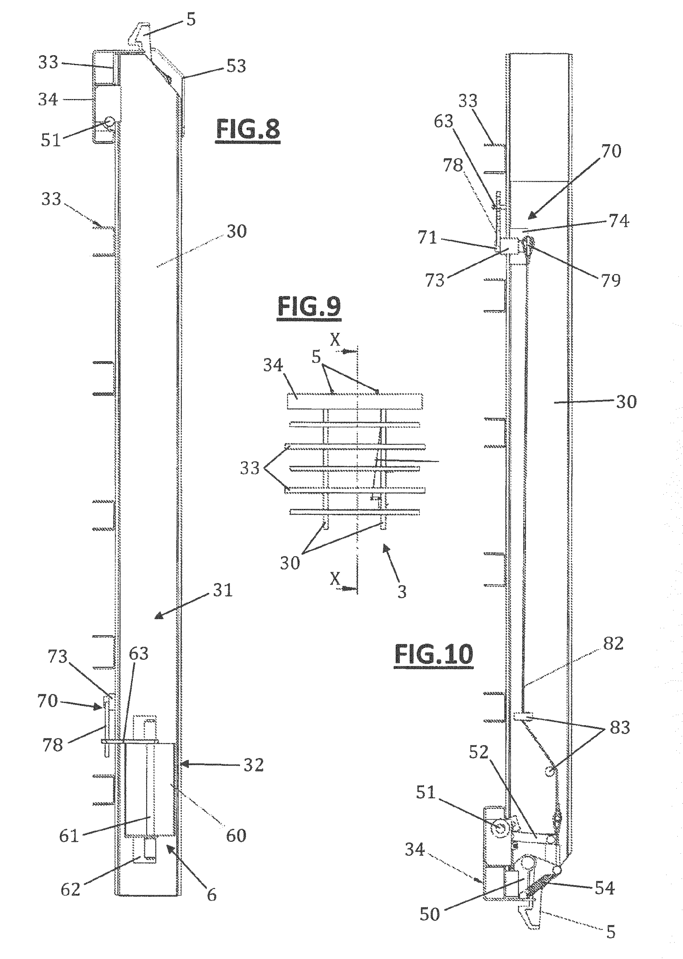

La présente invention décrite en référence aux figures 6 à 16 concerne un équipement amovible 2, notamment du type benne amovible, pourvu d'un dispositif d'actionnement des crochets 5 ; ledit dispositif d'actionnement pouvant par exemple venir en complément du dispositif d'actionnement manuel décrit ci-dessus en référence à la figure 4 et caractérisé par la poignée 55 ; un tel dispositif d'actionnement manuel étant classiquement présent sur les bennes amovibles existantes. Ainsi, les différents éléments de commande du verrouillage/déverrouillage tels que, et non limitativement, les crochets 5, les supports 50, l'arbre de commande 51, les biellettes 52 et la poutre 34 sont présents sur la benne amovible 2 qui accueille le dispositif d'actionnement, et ces éléments ne seront pas décrits à nouveau par la suite. Il est en de même pour la le contenant 4 pourvu d'une porte arrière 41 articulée en partie haute, et pour le berceau 3 pourvu de longerons 30 et de traverses 33 qui ne seront pas décrits à nouveau. Le dispositif d'actionnement est ainsi rapporté sur une benne amovible 2 existante et comprenant au moins les éléments 3, 30, 33, 34, 38, 39, 4, 41, 43, 44, 5, 50, 51 et 52 cités ci-dessus.

Ainsi, ce dispositif d'actionnement est prévu sur une benne amovible 2 destinée à être montée de façon amovible sur un camion 1 tel que décrit ci-dessus, en l'occurrence un camion 1 pourvu d'un châssis porteur 11 et d'un dispositif de bras hydraulique 9 comportant une partie mobile 91 (ou faux-châssis) fixée sur le châssis porteur 11 et une partie mobile 90 articulée sur la partie fixe 91 et munie de verrous 99 d'immobilisation de la benne 2 sur ladite partie mobile 90 du dispositif de bras hydraulique 9. Les éléments du camion 1 tels que, et de façon non limitative, le châssis porteur 11 et le dispositif de bras hydraulique 9 ne seront pas décrits à nouveau par la suite.

La benne amovible 2 selon l'invention comporte ainsi le dispositif d'actionnement 6, 7 des crochets 5 qui comprend principalement :
- un moyen de commande 6 fixé sur le berceau 3 de l'équipement 2 afin que ledit moyen de commande 6 soit disposé en vis-à-vis de l'un des verrous 99 dans la position d'arrêt de l'équipement 2 pour que ledit verrou 99 puisse pousser le moyen de commande 6 lorsqu'il immobilise la benne amovible 2 dans cette position d'arrêt ; et
- des moyens de raccordement 7 dudit moyen de commande 6 aux crochets 5 et qui sont conçus pour convertir la poussée du verrou 99 sur le moyen de commande 6 en une commande d'actionnement desdits crochets 5, en l'occurrence une commande d'ouverture des crochets 5 correspondant à un déverrouillage.

Pour que le moyen de commande 6 soit disposé en vis-à-vis du verrou 99 dans la position d'arrêt de l'équipement 2, ce moyen de commande 6 est rapporté sur la deuxième zone 32 du longeron 30 du berceau 3 ; cette deuxième zone 32, décrite ci-dessus, correspondant à la zone du longeron 30 sur laquelle le verrou 99 vient se fermer pour immobiliser le berceau 3 de la benne amovible 2 sur la partie mobile 90 du dispositif de bras hydraulique 9 dans la position d'arrêt.

Ce moyen de commande 6 comprend :
- un organe mobile 60 du type palette de commande montée à pivot autour d'un axe 61 d'articulation et réalisée sous la forme d'une plaque pliée comprenant deux parties, respectivement une partie inférieure et une partie supérieure, inclinées l'une par rapport à l'autre pour présenter une section en forme de « V » ;
- un support 62 de l'axe 61 d'articulation présentant deux manchons porteurs dudit axe 61 disposées de part et d'autre de la palette 60 et une embase plate sur laquelle sont fixés les manchons (notamment par soudage, boulonnage, collage ou similaire), ladite embase étant elle-même fixée (notamment par soudage, boulonnage, collage ou similaire) sur le longeron 30 dans la deuxième zone 32, et plus particulièrement sur l'âme centrale du longeron 30 ;
- un bras 63 solidaire de la palette 60, ledit bras 63 s'étendant le long d'un bord de la partie supérieure de ladite palette 60, de façon perpendiculaire à l'axe 61, et faisant saillie de ladite partie supérieure.

Le moyen de commande 6 est disposé sur le longeron 30 pour qu'une poussée du verrou 99 puisse provoquer le pivotement de ladite palette 60 autour de l'axe 61. Le support 62 est fixé sur la face externe de l'âme centrale du longeron 30. La palette 60 est avantageusement réalisée en acier, et notamment en acier THLE ou acier à haute limite élastique, pour éviter de se déformer sous la poussée du verrou 99 correspondant.

En particulier, et comme illustré notamment aux figures 11 à 13, le verrou 99 pousse la partie inférieure de la palette 60, entraînant ainsi en rotation toute la palette 60 ainsi que le bras 63. Le bras 63 présente un orifice à son extrémité libre opposée à l'axe 61, afin de pouvoir relier directement ledit bras 63 aux moyens de raccordement 7 décrits ci-dessous.

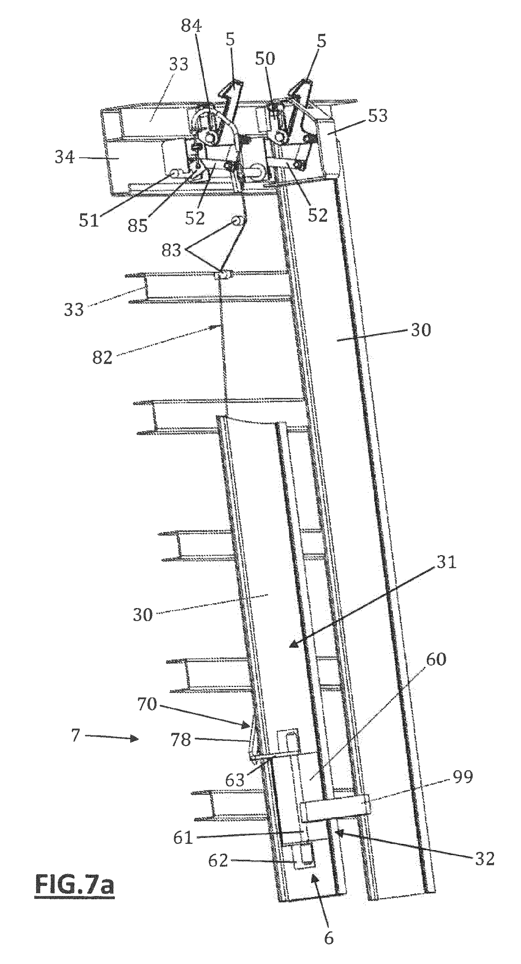

Comme visible aux figures 11b et 13a, la palette 60, et en particulier sa partie inférieure, est suffisamment mince pour que le verrou 99 puisse toujours se fermer sur le longeron 30, avec un éventuel jeu entre le verrou 99 et le longeron 30, et ainsi immobiliser le berceau 3. En outre, et comme visible en figure 7a, la palette 60, et en particulier sa partie inférieure, est plus large que le verrou 99 pour que l'opérateur puisse aisément amener ledit verrou 99 en face de la palette 60. Bien entendu, la palette 60 pourrait être plus ou moins large relativement au verrou 99.

Les moyens de raccordement 7 comprennent un système de renvoi 70 relié d'une part au moyen de commande 6 et relié d'autre part aux crochets 5, et plus particulièrement à l'arbre de commande 51. Ce système de renvoi 70 est réalisé sous la forme d'un inverseur rotatif qui comprend, en référence notamment aux figures 11b, 12b et 14 :
- un arbre 71 supportant solidairement à ses extrémités respectives deux bras, respectivement un bras supérieur 78 et un bras inférieur 79, inclinés l'un par rapport selon un angle droit, le bras supérieur 78 étant relié au moyen de commande 6 et le bras inférieur 79 étant relié à l'arbre de commande 51 ;
- un manchon 73 interposé entre les deux bras 78, 79 et à l'intérieur duquel l'arbre 71 est monté pivotant ; et
- un support 74 solidaire du manchon 73 et fixé (notamment par soudage) sur le longeron 30.

Le système de renvoi 70 est monté sur le longeron 30, en particulier sur l'âme centrale dudit longeron 30. Comme visible notamment en figure 12b, le système de renvoi 70 est rapporté sur la face interne de l'âme centrale du longeron 30, opposée à la face externe de ladite âme centrale sur laquelle est rapporté le moyen de commande 6.

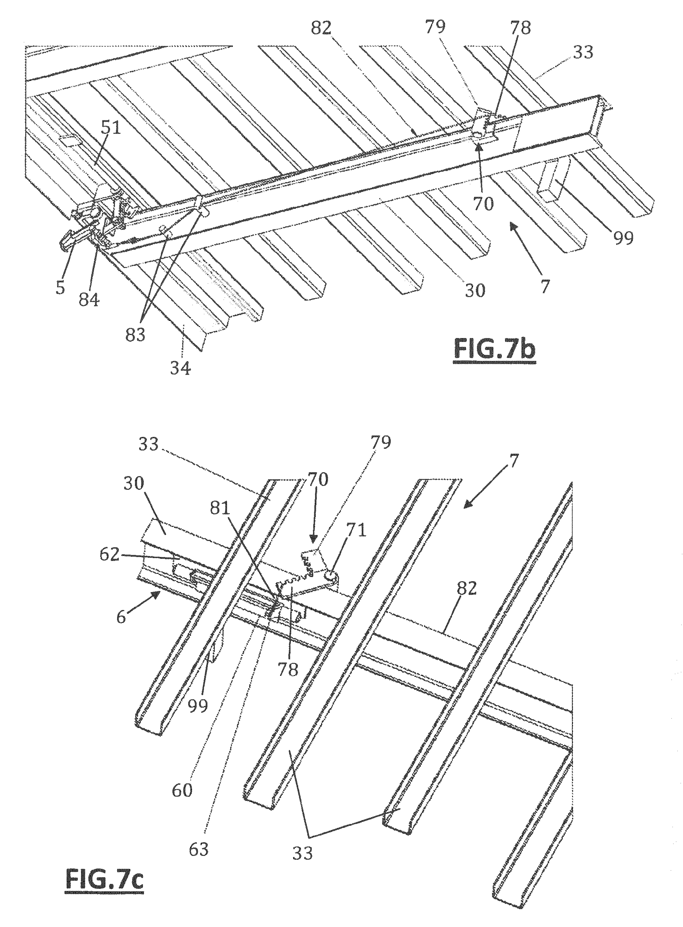

Comme visible aux figures 7, 8 et 11b, la disposition du système de renvoi 70 sur le longeron 30 est telle que son bras supérieur 78 s'étendent au-dessus du longeron 30, entre deux traverses 33, et peut ainsi pivoter au-dessus dudit longeron 30 afin de pouvoir être mis en liaison avec le bras 63 du moyen de commande 6 au moyen d'un premier câble 81. Ce premier câble 81 relie directement le bras 63 du moyen de commande 6 avec le bras supérieur 78 du système de renvoi 70 ; ce premier câble 81 présentant une extrémité accrochée dans l'orifice du bras 63, et une autre extrémité accrochée dans une encoche du bras supérieur 78. Le bras supérieur 78 présente d'ailleurs plusieurs encoches sur l'un de ses rebords pour pouvoir offrir plusieurs zones d'accrochage du premier câble 81, avec différentes tensions de câble associées.

Comme visible aux figures 6, 7 et 10, le bras inférieur 79 est mis en liaison avec l'arbre de commande 51 au moyen d'un second câble 82. Ce second câble 82 relie directement l'arbre de commande 51 avec le bras inférieur 79 du système de renvoi 70 ; ce second câble 82 présentant une extrémité accrochée à l'arbre de commande 51, et une autre extrémité accrochée dans une encoche du bras inférieur 79. Le bras inférieur 79 présente d'ailleurs plusieurs encoches sur l'un de ses rebords pour pouvoir offrir plusieurs zones d'accrochage du second câble 82, avec différentes tensions de câble associées.

Le second câble 82, réalisé en une ou plusieurs portions mises bout à bout, est guidé jusqu'à l'arbre de commande 51 via des guides 83, notamment de forme cylindrique et par exemple du type poulie, qui assurent des changements de direction du second câble 82. Entre les guides 83 et l'arbre de commande 51, le second câble 82 circule dans une gaine 84 recourbée pour que le second câble 82 se retourne d'un angle sensiblement de l'ordre de 180° avant de venir s'accrocher sur l'arbre de commande 51. La gaine 84 est par ailleurs accrochée sur la poutre 34. Le second câble 82 est accroché dans l'orifice d'une biellette 85 (ou plateau) fixée sur l'arbre de commande 51.

Les moyens de raccordement 7 comprennent ainsi, en plus du système de renvoi 70, ce qui constitue une commande par câble et gaine, à savoir : les deux câbles 81, 82, les guides 83, la gaine 84 et la biellette 85.

Le fonctionnement du dispositif d'actionnement 6, 7 est décrit ci-après.

Le conducteur du camion 1 conduit le camion 1 entre deux points, et transporte la benne amovible 2 qui est verrouillée sur la partie mobile 90 du dispositif de bras hydraulique 9 dans la position de transport au moyen des verrous 99. Pour rappel, les verrous 99 sont fermés sur les premières zones 31 des longerons 30.

A l'arrêt du véhicule, avant de basculer la benne amovible 2 vers l'arrière, le conducteur déverrouille la benne amovible 2 en ouvrant les verrous 99 puis il recule ladite benne 2 de la longueur L susmentionnée par un actionnement du dispositif de bras hydraulique 9. Puis, le conducteur verrouille à nouveau la benne amovible 2 sur la partie mobile 90 du dispositif de bras hydraulique 9 en fermant les verrous 99 sur les deuxièmes zones 32 des longerons 30. Ainsi, l'un des verrous 99 entre en contact avec la palette 60 et pousse cette dernière, de sorte que ladite palette 60 pivote autour de son axe 61.

En pivotant, la palette 60 entraîne également le bras 63 en rotation autour de cet axe 61, et le bras 63 entraîne en rotation le bras supérieur 78 du système de renvoi 70 via le premier câble 81 ; ledit bras supérieur 78 tournant avec l'arbre 71 dans le manchon 73. De ce fait, le bras inférieur 79 pivote également et tire le second câble vers l'avant de l'équipement, autrement dit en direction de la cabine 10 du camion 1.

Au final, le second câble 82 entraîne en rotation l'arbre de commande 51 et fait baisser les crochets 5, c'est-à-dire entraîne les crochets 5 dans la position ouverte.

Ainsi, la porte arrière 41 du contenant 4 de la benne amovible 2 est déverrouillée et le conducteur peut faire basculer la benne amovible 2 pour vider la charge.

En conclusion, ce dispositif d'actionnement est facile d'utilisation, en plus d'être facile de montage : il suffit pour cela de fixer le moyen de commande 6, le système de renvoi 7 et les guides 83 dans les zones appropriées du longeron 30, puis de fixer les premier 81 et second 82 câbles sur les différents points d'accrochage prévus à cet effet. La modification d'une benne amovible existante est très aisée, et nécessite au préalable que quelques prises de côtes pour déterminer les bonnes zones de fixation sur le longeron 30.

De manière générale, une benne amovible 2 conforme à l'invention présente au moins deux zones de verrouillages 31, 32 pour le verrou 99, et le moyen de commande 6 est fixé sur l'une 32 de ces zones de verrouillage. Ainsi, le conducteur peut :
- d'une part, verrouiller la benne amovible 2 sur la partie mobile 90 du dispositif de bras hydraulique 9 par fermeture du verrou 99 sur la première zone 31 de verrouillage sans agir sur l'organe fonctionnel de l'équipement 2, tel que les crochets 5 de verrouillage ; et
- d'autre part, verrouiller la benne amovible 2 sur la partie mobile 90 du dispositif de bras hydraulique 9 par fermeture du verrou 99 sur la seconde zone 32 de verrouillage, après déplacement linéaire de la benne amovible 2, ce qui permettra le déclenchement du moyen de commande 6 par le verrou 99 et ainsi l'actionnement de l'organe fonctionnel 5.

Bien entendu l'exemple de mise en oeuvre évoqué ci-dessus ne présente aucun caractère limitatif et d'autres détails et améliorations peuvent être apportés au dispositif de commande et à l'équipement selon l'invention, sans pour autant sortir du cadre de l'invention où d'autres formes de moyens de commande et/ou de moyens de raccordement peuvent être réalisées.

Par exemple, il est envisageable de disposer plusieurs moyens de commande le long du longeron, décalés les uns par rapport aux autres, où chaque organe de commande assure la commande d'un organe fonctionnel respectif de l'équipement amovible ; plusieurs zones de verrouillage sont ainsi présentes sur l'équipement amovible. Il suffit ensuite au conducteur de déplacer l'équipement amovible sur le camion 1 pour mettre le verrou en vis-à-vis de l'un ou l'autre des moyens de commande, en fonction de l'organe fonctionnel que le conducteur souhaite actionner.

Il est également envisageable de disposer deux moyens de commande sur deux longerons distincts, autrement dit sur les deux côtés respectivement droit et gauche du camion ; chacun desdits moyens de commande étant associé à un verrou distinct. Ainsi, lorsque l'opérateur ferme les verrous, les deux verrous poussent chacun le moyen de commande correspondant et deux organes fonctionnels sont actionnés en même temps.

En outre, l'organe mobile réalisé sous la forme d'une palette pivotante peut être remplacé par un interrupteur électrique (ou un contacteur) que le verrou viendra pousser lors de sa fermeture sur le longeron.

De plus, l'organe mobile peut être réalisé sous la forme d'une pièce mobile en translation, par exemple à l'intérieur d'un fourreau ou d'un guide monté sur le longeron, et que le verrou viendra pousser lors de sa fermeture sur le longeron. Cette organe mobile en translation peut, dans une réalisation particulière, traversé le longeron.

Dans une variante illustrée aux figures 16a et 16b, le système de renvoi n'est pas réalisé sous la forme de l'inverseur rotatif décrit ci-avant, mais sous la forme d'un système câble/gaine. Dans cette variante, le moyen de commande 6 n'est pas modifié à l'exception du bras 63 qui présente, à son extrémité opposée à l'axe 61, une partie recourbée 64 s'étendant au-dessus du longeron 30. La partie recourbée 64 présente une zone d'accrochage 65 pour un câble 86, où la zone d'accrochage 65 est ici réalisée sous la forme d'une encoche. Les moyens de raccordement 7 comprennent dans cette variante le câble 86 et une gaine 87 recourbée afin d'orienter le câble 86 d'une direction transversale vers une direction longitudinale le long du longeron 30. Ainsi, la rotation de la palette 60 de commande autour de l'axe 61, sous l'effet de la poussée du verrou 99, conduit à la rotation du bras 63 correspondant à un éloignement du bras 63 vis-à-vis du longeron 30, et conduit ainsi à une mise en tension du câble 86. Le câble 86 peut être réalisé en plusieurs tronçons de câble, avec un ou plusieurs dispositifs intermédiaires 88 de réglage de la tension. Les moyens de raccordement 7 peuvent également comprendre une butée 89 d'arrêt du bras 63 ; cette butée 89 peut être du type réglable avec une vis montée dans un support solidaire du longeron 30. Cette butée 89 est disposée en regard de la partie recourbée 64 du bras 63 et est destinée à limiter la rotation du bras 63 autour de l'axe 61.

## Revendications

1. Equipement (2) amovible de transport d'une charge, notamment du type benne amovible, conçu pour être monté de façon amovible sur un véhicule (1) et être verrouillé sur ledit véhicule au moyen d'au moins un verrou (99) d'immobilisation dudit équipement (2) sur ledit véhicule (1), ledit équipement (2) étant apte à se déplacer linéairement selon une direction longitudinale sur ledit véhicule (1) entre une position dite de transport et au moins une autre position dite d'arrêt et comprenant au moins un dispositif d'actionnement d'un organe fonctionnel (5, 51) monté sur l'équipement (2), **caractérisé en ce que** le dispositif d'actionnement comprend
- au moins un moyen de commande (6) fixé sur une zone (32) prédéterminée de l'équipement (2) afin que ledit moyen de commande (6) soit disposé en vis-à-vis du verrou (99) dans la position d'arrêt de l'équipement (2) pour que le verrou (99) puisse pousser le moyen de commande (6) lorsqu'il immobilise ledit équipement (2) dans cette position d'arrêt ; et
- des moyens de raccordement (7) dudit moyen de commande (6) audit organe fonctionnel (5, 51) conçus pour convertir la poussée du verrou (99) sur le moyen de commande (6) en une commande d'actionnement dudit organe fonctionnel (5, 51).

2. Equipement (2) selon la revendication 1, dans lequel le moyen de commande (6) comprend un organe mobile (60) monté de façon mobile sur ladite zone (32) de l'équipement (2) de sorte qu'une poussée du verrou (99) puisse provoquer le déplacement de l'organe mobile (60) entre une première et une deuxième position.

3. Equipement (2) selon la revendication 2, dans lequel l'organe mobile (60) est monté à pivot sur la zone (32) de l'équipement (2) autour d'un axe d'articulation (61), de sorte qu'une poussée du verrou (99) puisse provoquer le pivotement dudit organe de commande (60).

4. Equipement (2) selon l'une quelconque des revendications 2 et 3, dans lequel les moyens de raccordement (7) comprennent un système mécanique de transmission (70, 81, 82, 83, 84, 85; 86, 87, 88, 89) du déplacement de l'organe de commande (60) à destination de l'organe fonctionnel (5, 51).

5. Equipement (2) selon la revendication 4, dans lequel le système mécanique de transmission comprend un système de renvoi, notamment du type système à poulie ou inverseur rotatif (70) ou système à biellette ou système câble (86) / gaine (87), relié d'une part à l'organe de commande (60) et relié d'autre part à l'organe fonctionnel (5, 51).

6. Equipement (2) selon la revendication 1, dans lequel le moyen de commande comprend un interrupteur électrique de sorte qu'une poussée du verrou (99) sur ledit interrupteur puisse établir ou interrompre le passage d'un courant électrique.

7. Equipement (2) selon l'une quelconque des revendications précédentes, comportant un berceau (3) apte à se déplacer en translation selon la direction longitudinale sur le véhicule, notamment au moyen d'un bras d'actionnement (9) fixé sur le véhicule (1), le berceau (3) présentant une première zone de verrouillage (31) destinée à coopérer avec le verrou (99) lorsque le berceau (3) est en position de transport, et au moins une deuxième zone de verrouillage (32), décalée par rapport à la première zone de verrouillage (31) selon la direction longitudinale, destinée à coopérer avec le verrou (99) lorsque le berceau (3) est en position d'arrêt, dans lequel que le moyen de commande (6) est disposé sur la deuxième zone de verrouillage (32) de sorte que, en utilisation sur le véhicule, le verrou (99) se ferme :
- sur la première zone de verrouillage (31) dans la position de transport ; et
- sur la deuxième zone de verrouillage (32) dans la position d'arrêt tout en coopérant avec le moyen de commande (6) afin d'actionner l'organe fonctionnel (5, 51).

8. Equipement (2) selon l'une quelconque des revendications précédentes, dans lequel l'équipement constitue une benne amovible comprenant une porte arrière (41) et au moins un organe de verrouillage (5, 51) de ladite porte arrière (41), et dans lequel l'organe fonctionnel correspond audit organe de verrouillage (5, 51) de la porte arrière (41) afin que le dispositif d'actionnement (6, 7) puisse actionner le déverrouillage de la porte arrière (41) lors de la poussée du verrou (99) sur le moyen de commande (6).

9. Véhicule (1) sur lequel est monté de façon amovible un équipement (2) amovible conforme à l'une quelconque des revendications 1 à 8, ledit véhicule (1) comportant au moins un verrou (99) d'immobilisation dudit équipement (2) sur ledit véhicule (1) et des moyens de mise en déplacement (9) conçus pour déplacer linéairement ledit équipement (2) selon la direction longitudinale sur ledit véhicule (1) entre la position de transport et la position d'arrêt.

10. Véhicule (1) selon la revendication 9, dans lequel les moyens de mise en déplacement comportent un dispositif de bras hydraulique (9) fixé sur un châssis porteur (11) du véhicule (1), ledit dispositif de bras hydraulique (9) comportant :
- une partie fixe (91), notamment du type faux-châssis, fixée sur le châssis porteur (11) ;
- une partie mobile (90) articulée sur la partie fixe (91) et conçue pour déplacer linéairement l'équipement (2) par rapport à la partie fixe (91) et pour faire pivoter ou basculer l'équipement (2) vis-à-vis de la partie fixe (91) et du châssis porteur (11) ; et
- le au moins un verrou (99) qui est monté sur la partie mobile (90) entre une position de verrouillage et une position de déverrouillage de l'équipement (2) sur la partie mobile (90), ledit verrou (99) étant conçu pour :
- dans sa position de verrouillage, immobiliser l'équipement (2) sur la partie mobile (90) lors d'un pivotement ou basculement de l'équipement (2) vis-à-vis de la partie fixe (91) et du châssis porteur (11) ;
- dans sa position de déverrouillage, autoriser le déplacement linéaire de l'équipement (2) entre la position de transport et la position d'arrêt, ledit verrou (99) ne suivant pas le mouvement de déplacement linéaire de l'équipement (2) mais restant fixe sur la partie mobile (90), de sorte que ledit verrou (99) se ferme sur deux zones distinctes de verrouillage (31 ; 32) de l'équipement (2) entre la position de transport et la position d'arrêt.

11. Véhicule (1) selon la revendication 10, dans lequel le dispositif de bras hydraulique (9) est conçu pour au moins les trois modes de fonctionnement suivants :
- un premier fonctionnement dans lequel le verrou (99) est en position de déverrouillage et la partie mobile (90) est déplacée par rapport à la partie fixe (91) pour déposer l'équipement (2) au sol ou inversement pour charger l'équipement (2) du sol sur le véhicule (1) ;
- un deuxième fonctionnement dans lequel le verrou (99) est en position de verrouillage et la partie mobile (90) est déplacée en rotation vers l'arrière du véhicule (1) afin de basculer l'équipement (2) vers l'arrière du véhicule (1), ledit équipement (2) restant verrouillée sur la partie mobile (90) du dispositif de bras hydraulique (9) par le verrou (99) pendant ce basculement ; et
- un troisième fonctionnement dans lequel le verrou (99) est en position de verrouillage et la partie mobile (90) est maintenue horizontalement sur le véhicule (1) pour le transport de l'équipement (2), ledit équipement (2) occupant la position de transport.

12. Procédé de montage d'un dispositif d'actionnement d'un organe fonctionnel (5, 51) sur un équipement (2) amovible de transport d'une charge, notamment du type benne amovible, ledit équipement (2) étant conçu pour être monté de façon amovible sur un véhicule (1) et être verrouillé sur ledit véhicule au moyen d'au moins un verrou (99) d'immobilisation dudit équipement (2) sur ledit véhicule, et ledit équipement (2) étant apte à se déplacer linéairement sur ledit véhicule (1) entre une position dite de transport et au moins une autre position dite d'arrêt, ledit procédé comprenant les étapes suivantes :
- fixer au moins un moyen de commande (6) sur une zone (32) prédéterminée (32) de l'équipement (2) afin que ledit moyen de commande (6) soit disposé en vis-à-vis du verrou (99) dans la position d'arrêt de l'équipement (2) pour que le verrou (99) puisse pousser le moyen de commande (6) lorsqu'il immobilise ledit équipement (2) dans cette position d'arrêt ; et
- raccorder le moyen de commande (6) à l'organe fonctionnel (5, 51) via les moyens de raccordement (7) afin de pouvoir convertir la poussée du verrou (99) sur le moyen de commande (6) en une commande d'actionnement dudit organe fonctionnel (5, 51).

## Patentansprüche

1. Abnehmbarer Aufbau (2) zum Transport einer Last, insbesondere vom Typ abnehmbarer Container, der ausgebildet ist, um abnehmbar auf einem Fahrzeug (1) aufgesetzt zu sein und auf dem Fahrzeug mit Hilfe mindestens eines Blockierriegels (99) des Aufbaus (2) auf dem Fahrzeug (1) verriegelt zu sein, wobei der Aufbau (2) imstande ist, sich linear gemäß einer Längsrichtung auf dem Fahrzeug (1) zwischen einer Transportposition und mindestens einer anderen Stoppposition zu verlagern und mindestens eine Betätigungsvorrichtung eines Funktionsorgan (5, 51) umfasst, das auf dem Aufbau (2) montiert ist, **dadurch gekennzeichnet, dass** die Betätigungsvorrichtung umfasst:
- mindestens ein Steuermittel (6), das in einem vorbestimmten Bereich (32) des Aufbaus (2) befestigt ist, damit das Steuermittel (6) gegenüber dem Riegel (99) in der Stoppposition des Aufbaus (2) angeordnet ist, damit der Riegel (99) das Steuermittel (6) drücken kann, wenn es den Aufbau (2) in dieser Stoppposition blockiert; und
- Verbindungsmittel (7) des Steuermittels (6) mit dem Funktionsorgan (5, 51), die ausgebildet sind, um den Druck des Riegels (99) auf das Steuermittel (6) in einen Betätigungsbefehl des Funktionsorgans (5, 51) umzuwandeln.

2. Aufbau (2) nach Anspruch 1, wobei das Steuermittel (6) ein mobiles Organ (60) umfasst, das mobil in dem Bereich (32) des Aufbaus (2) derart montiert ist, dass ein Druck des Riegels (99) die Verlagerung des mobilen Organs (60) zwischen einer ersten und einer zweiten Position verursachen kann.

3. Aufbau (2) nach Anspruch 2, wobei das mobile Organ (60) drehbar im Bereich (32) des Aufbaus (2) um eine Gelenkachse (61) derart montiert ist, dass ein Druck des Riegels (99) das Drehen des Steuerorgans (60) verursachen kann.

4. Aufbau (2) nach einem der Ansprüche 2 und 3, wobei die Verbindungsmittel (7) ein mechanisches Übertragungssystem (70, 81, 82, 83, 84, 85 ; 86, 87, 88, 89) der Verlagerung des Steuerorgans (60) in Richtung des Funktionsorgans (5, 51) umfassen.

5. Aufbau (2) nach Anspruch 4, wobei das mechanische Übertragungssystem ein Umlenksystem, insbesondere vom Typ System mit Rolle oder Rotationsumschalter (70) oder System mit Pleuel oder System mit Kabel (86) / Mantel (87) umfasst, das einerseits mit dem Steuerorgan (60) verbunden ist und andererseits mit dem Funktionsorgan (5, 51) verbunden ist.

6. Aufbau (2) nach Anspruch 1, wobei das Steuermittel einen elektrischen Schalter derart umfasst, dass ein Druck des Riegels (99) auf den Schalter den Durchgang eines elektrischen Stroms herstellen oder unterbrechen kann.

7. Aufbau (2) nach einem der vorangehenden Ansprüche, der ein Gestell (3) aufweist, das imstande ist, sich verschiebend gemäß der Längsrichtung auf dem Fahrzeug zu verlagern, insbesondere mit Hilfe eines auf dem Fahrzeug (1) befestigten Betätigungsarms (9), wobei das Gestell (3) einen ersten Verriegelungsbereich (31) aufweist, der zur Zusammenarbeit mit dem Riegel (99) bestimmt ist, wenn das Gestell (3) in Transportposition ist, und mindestens einen zweiten Verriegelungsbereich (32), der im Verhältnis zum ersten Verriegelungsbereich (31) gemäß der Längsrichtung versetzt ist, der zur Zusammenarbeit mit dem Riegel (99) bestimmt ist, wenn das Gestell (3) in Stoppposition ist, wobei das Steuermittel (6) im zweiten Verriegelungsbereich (32) derart angeordnet ist, dass sich, in Benutzung auf dem Fahrzeug, der Riegel (99) schließt:
- im ersten Verriegelungsbereich (31) in der Transportposition, und
- im zweiten Verriegelungsbereich (32) in der Stoppposition in Zusammenarbeit mit dem Steuermittel (6), um das Funktionsorgan (5, 51) zu betätigen.

8. Aufbau (2) nach einem der vorangehenden Ansprüche, wobei der Aufbau einen abnehmbaren Container bildet, der eine hintere Tür (41) und mindestens ein Verriegelungsorgan (5, 51) der hinteren Tür (41) umfasst, und wobei das Funktionsorgan dem Verriegelungsorgan (5, 51) der hinteren Tür (41) entspricht, damit die Betätigungsvorrichtung (6, 7) die Entriegelung der hinteren Tür (41) beim Drücken des Riegels (99) auf das Steuermittel (6) betätigen kann.

9. Fahrzeug (1), auf dem ein abnehmbarer Aufbau (2) nach einem der Ansprüche 1 bis 8 abnehmbar aufgesetzt ist, wobei das Fahrzeug (1) mindestens einen Blockierriegel (99) des Aufbaus (2) auf dem Fahrzeug (1) und Verlagerungsmittel (9) aufweist, die ausgebildet sind, um den Aufbau (2) linear gemäß der Längsrichtung auf dem Fahrzeug (1) zwischen der Transportposition und der Stoppposition zu verlagern.

10. Fahrzeug (1) nach Anspruch 9, wobei die Verlagerungsmittel eine hydraulische Armvorrichtung (9) aufweisen, die auf einem Hauptrahmen (11) des Fahrzeugs (1) befestigt ist, wobei die hydraulische Armvorrichtung (9) aufweist:
- einen starren Teil (91), insbesondere vom Typ Hilfsrahmen, der auf dem Hauptrahmen (11) befestigt ist,
- einen beweglichen Teil (90), der auf dem starren Teil (91) angelenkt ist und ausgebildet, um den Aufbau (2) linear im Verhältnis zum starren Teil (91) zu verlagern und um den Aufbau (2) gegenüber dem starren Teil (91) und dem Hauptrahmen (11) zu schwenken oder zu kippen; und
- den mindestens einen Riegel (99), der auf dem beweglichen Teil (90) zwischen einer Verriegelungsposition und einer Entriegelungsposition des Aufbaus (2) auf dem beweglichen Teil (90) montiert ist, wobei der Riegel (99) ausgebildet ist, um:
- in seiner Verriegelungsposition den Aufbau (2) auf dem beweglichen Teil (90) bei einem Schwenken oder Kippen des Aufbaus (2) gegenüber dem starren Teil (91) und dem Hauptrahmen (11) zu blockieren,
- in seiner Entriegelungsposition die lineare Verlagerung des Aufbaus (2) zwischen der Transportposition und der Stoppposition zu genehmigen, wobei der Riegel (99) nicht der linearen Verlagerungsbewegung des Aufbaus (2) folgt, sondern starr auf dem beweglichen Teil (90) derart verbleibt, dass sich der Riegel (99) in zwei unterschiedlichen Verriegelungsbereichen (31; 32) des Aufbaus (2) zwischen der Transportposition und der Stoppposition schließt.

11. Fahrzeug (1) nach Anspruch 10, wobei die hydraulische Armvorrichtung (9) für die mindestens drei folgenden Funktionsarten ausgebildet ist:
- eine erste Funktion, bei der der Riegel (99) in Entriegelungsposition ist und der bewegliche Teil (90) im Verhältnis zum starren Teil (91) verlagert ist, um den Aufbau (2) auf dem Boden abzusetzen oder umgekehrt, um den Aufbau (2) vom Boden auf das Fahrzeug (1) zu verladen,
- eine zweite Funktion, bei der der Riegel (99) in Verriegelungsposition ist und der bewegliche Teil (90) in Rotation in die hintere Richtung des Fahrzeugs (1) verlagert ist, um den Aufbau (2) in die hintere Richtung des Fahrzeugs (1) zu kippen, wobei der Aufbau (2) während dieses Kippens auf dem beweglichen Teil (90) der hydraulischen Armvorrichtung (9) durch den Riegel (99) verriegelt bleibt, und
- eine dritte Funktion, bei der der Riegel (99) in Verriegelungsposition ist und der bewegliche Teil (90) für den Transport des Aufbaus (2) horizontal auf dem Fahrzeug (1) gehalten wird, wobei der Aufbau (2) die Transportposition einnimmt.

12. Montageverfahren einer Betätigungsvorrichtung eines Funktionsorgans (5, 51) auf einem abnehmbaren Aufbau (2) zum Transport einer Last, insbesondere vom Typ abnehmbarer Container, wobei der Aufbau (2) ausgebildet ist, um abnehmbar auf einem Fahrzeug (1) aufgesetzt zu sein und auf dem Fahrzeug mit Hilfe mindestens eines Blockierriegels (99) des Aufbaus (2) auf dem Fahrzeug verriegelt zu sein, und der Aufbau (2) imstande ist, sich linear auf dem Fahrzeug (1) zwischen einer Transportposition und mindestens einer anderen Stoppposition zu verlagern, wobei das Verfahren die folgenden Schritte aufweist:
- Befestigen mindestens eines Steuermittels (6) in einem vorbestimmten Bereich (32) des Aufbaus (2), damit das Steuermittel (6) gegenüber dem Riegel (99) in der Stoppposition des Aufbaus (2) angeordnet ist, damit der Riegel (99) das Steuermittel (6) schieben kann, wenn es den Aufbau (2) in dieser Stoppposition blockiert; und
- Verbinden des Steuermittels (6) mit dem Funktionsorgan (5, 51) über die Verbindungsmittel (7), um den Druck des Riegels (99) auf das Steuermittel (6) in einen Betätigungsbefehl des Funktionsorgans (5, 51) umzuwandeln.

## Claims

1. Removable equipment (2) for transporting a load, in particular of the removable bin type, designed to be removably mounted on a vehicle (1) and to be locked on said vehicle using at least one bolt (99) for mobilizing said equipment (2) on said vehicle (1), said equipment (2) being capable of moving linearly in a longitudinal direction on said vehicle (1) between a so-called transport position and at least one other so-called stopped position and comprising at least one device for actuating a functional member (5, 51) mounted on the equipment (2), **characterized in that** the actuating device comprises:
- at least one control means (6) fixed on a predetermined zone (32) of the equipment (2) so that said control means (6) is positioned across from the bolt (99) in the stopped position of the equipment (2) so that the bolt (99) can push the control means (6) when it immobilizes said equipment (2) **in that** stopped position; and
- connecting means (7) for connecting said control means (6) to said functional member (5, 51) designed to convert the pushing of the bolt (99) on the control member (6) into an actuating command of said functional member (5, 51).

2. The equipment (2) according to claim 1, wherein the control means (6) comprises a moving member (60) movably mounted on said zone (32) of the equipment (2) such that pushing on the bolt (99) can cause the moving member (60) to move between a first and second position.

3. The equipment (2) according to claim 2, wherein the moving member (60) is pivotably mounted on the zone (32) of the equipment (2) around a hinge pin (61), such that pushing on the bolt (99) can cause said control member (60) to pivot.

4. The equipment (2) according to any one of claims 2 and 3, wherein the connecting means (7) comprise a mechanical transmission system (70, 81, 82, 83, 84, 85; 86, 87, 88, 89) for transmitting the movement of the control member (60) intended for the functional member (5, 51).

5. The equipment (2) according to claim 4, wherein the mechanical transmission system comprises a return system, in particular of the pulley or rotary inverter system type (70) or a link rod system or cable (86) / sheath (87) system, connected on the one hand to the control member (60) and the other hand to the functional member (5, 51).

6. The equipment (2) according to claim 1, wherein the control means comprises an electrical switch such that pushing of the bolt (99) on said switch can establish or interrupt the passage of electrical current.

7. The equipment (2) according to any one of the preceding claims, comprising a cradle (3) capable of moving in translation in the longitudinal direction on the vehicle, in particular using an actuating arm (9) fastened on the vehicle (1), the cradle (3) having a first locking zone (31) intended to cooperate with the bolt (99) when the cradle (3) is in the transport position, and at least one second locking zone (32), offset relative to the first locking zone (31) in the longitudinal direction, intended to cooperate with the bolt (99) when the cradle (3) is in the stopped position, in which the control means (6) is positioned in the second locking zone (32) such that, in use on the vehicle, the bolt (99) closes:
- on the first locking zone (31) in the transport position; and
- on the second locking zone (32) in the stopped position while cooperating with the control means (6) so as to actuate the functional member (5, 51).

8. The equipment (2) according to any one of the preceding claims, wherein the equipment constitutes a removable bin comprising a back door (41) and at least one locking member (5, 51) of said back door (41), and wherein the functional member corresponds to said locking member (5, 51) of the back door (41) so that the actuating device (6, 7) can actuate the unlocking of the back door (41) during pushing of the bolt (99) on the control means (6).

9. A vehicle (1) on which the movable equipment (2) according to any one of claims 1 to 8 is removably mounted, said vehicle (1) including at least one bolt (99) for immobilizing said equipment (2) on said vehicle (1) and means for setting in motion (9) designed to move said equipment (2) linearly in the longitudinal direction on said vehicle (1) between the transport position and the stopped position.

10. The vehicle (1) according to claim 9, wherein the means for setting in motion including a hydraulic arm device (9) fixed on a support chassis (11) of the vehicle (1), said hydraulic arm device (9) including:
- a stationary portion (91), in particular of the subframe type fixed on the support chassis (11);
- a movable part (90) articulated on the stationary part (91) and designed to move the equipment (2) linearly with respect to the stationary part (91) and to pivot or tilt the equipment (2) with respect to the stationary part (91) and the support chassis (11); and
- the at least one bolt (99), which is mounted on the moving part (90) between a locked position and an unlocked position of the equipment (2) on the moving portion (90), said bolt (99) being designed:
- in its locked position, to immobilize the equipment (2) on the moving portion (90) during pivoting or tilting of the equipment (2) with respect to the stationary portion (91) and the support chassis (11);
- in its unlocked position, to allow the linear movement of the equipment (2) between the transport position and the stopped position, said bolt (99) not following the linear displacement movement of the equipment (2), but remaining stationary on the moving portion (90), such that said bolt (99) closes on two distinct locking zones (31; 32) of the equipment (2) between the transport position and the stopped position.

11. The vehicle (1) according to claim 10, wherein the hydraulic arm device (9) is designed for at least the following three operating modes:
- a first operating mode, in which the bolt (99) is in the unlocked position and the moving portion (90) is moved relative to the stationary portion (91) to place the equipment (2) on the ground, or conversely to load the equipment (2) from the ground onto the vehicle (1);
- a second operating mode, in which the bolt (99) is in the locked position and the moving portion (90) is rotated toward the rear of the vehicle (1) so as to tilt the equipment (2) toward the rear of the vehicle (1), said equipment (2) remaining locked on said moving portion (90) of the hydraulic arm device (9) by the bolt (99) during that tilting; and
- a third operating mode, in which the bolt (99) is in the locked position and the moving portion (90) is maintained horizontally on the vehicle (1) to transport the equipment (2), said equipment (2) occupying the transport position.

12. A method for mounting a device for actuating a functional member (5, 51) on removable equipment (2) for transporting a load, in particular of the removable bin type, said equipment (2) being designed to be removably mounted on a vehicle (1) and to be locked on said vehicle using at least one bolt (99) for immobilizing said equipment (2) on said vehicle, and said equipment (2) being capable of moving linearly on said vehicle (1) between a so-called transport position and at least one other so-called stopped position, said method comprising the following steps:
- fastening at least one control means (6) on a predetermined zone (32) of the equipment (2) so that said control means (6) is positioned across from the bolt (99) in the stopped position of the equipment (2) so that the bolt (99) can push the control means (6) when it immobilizes said equipment (2) in said stopped position; and
- connecting the control means (6) to the functional member (5, 51) via the connecting means (7) so as to be able to convert the push of the bolt (99) on the control member (6) into a command to actuate said functional member (5, 51).
